(19) Europäisches Patentamt
European Patent Office
Office européen des brevets

(11) **EP 3 390 534 B1**

(12) **EUROPEAN PATENT SPECIFICATION**

(45) Date of publication and mention
of the grant of the patent:
**13.11.2019 Bulletin 2019/46**

(51) Int Cl.:
*C08L 51/04* (2006.01)   *C08L 55/02* (2006.01)
*C08L 67/04* (2006.01)   *C08L 91/00* (2006.01)
*C08L 23/20* (2006.01)   *C08K 5/1575* (2006.01)
*C08F 279/02* (2006.01)   *F25D 23/06* (2006.01)

(21) Application number: **17761098.7**

(22) Date of filing: **05.09.2017**

(86) International application number:
**PCT/EP2017/072261**

(87) International publication number:
**WO 2018/046503 (15.03.2018 Gazette 2018/11)**

(54) **IMPROVED MONOVINYLAROMATIC POLYMER COMPOSITIONS COMPRISING BIOPOLYMER**

VERBESSERTE MONOVINYLAROMATISCHE POLYMERE ZUSAMMENSETZUNGEN MIT BIOPOLYMER

COMPOSITIONS POLYMÈRES MONOVINYLAROMATIQUES AMÉLIORÉES COMPRENANT UN BIOPOLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2016 EP 16187396**
**02.08.2017 EP 17184392**

(43) Date of publication of application:
**24.10.2018 Bulletin 2018/43**

(73) Proprietor: **Total Research & Technology Feluy**
**7181 Seneffe (BE)**

(72) Inventors:
• **THIERRY-MIEG, Jérôme**
  **B-1060 Saint Gilles (BE)**
• **EON, Serge**
  **1410 Waterloo (BE)**
• **JONNIEAUX, Vinciane**
  **5190 Mornimont (BE)**
• **SIGWALD, Armelle**
  **1400 Nivelles (BE)**
• **VANTOMME, Aurélien**
  **7070 Mignault (BE)**
• **KHAN-JEAUDEEN, Mazad**
  **1150 Woluwe St Pierre (BE)**
• **PERCHE, Elodie**
  **1000 Bruxelles (BE)**
• **GUINOVART, Antonio**
  **08030 Barcelona (ES)**

(74) Representative: **Garcia Martin, Margarita**
**Total Research & Technology Feluy**
**Patent Department**
**Zone Industrielle Feluy C**
**7181 Seneffe (BE)**

(56) References cited:
**EP-A1- 1 975 201**   **EP-A1- 2 961 781**
**EP-A2- 0 770 632**   **WO-A1-2015/118141**
**JP-A- 2008 050 426**   **US-A- 4 388 443**
**US-A1- 2011 218 292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The invention relates to rubber-modified monovinylaromatic polymer compositions, such as high impact polystyrene (HIPS) compositions, with improved performances in stress crack properties, and to the process for producing such composition. The invention also relates to articles made thereof.

**Background of the invention**

Thermoformed articles such as food containers made from high impact (*i.e.* rubber-modified) polystyrene (HIPS), a common rubber-modified monovinylaromatic polymer, are prone to stress cracking when they come into contact with fats and oils found in organic food products. Articles made from HIPS are also subject to stress cracking when coming into contact with organic blowing agents such as halohydrocarbons, containing fluorine and chlorine. These polymers generally are found in household items such as refrigerator liners, which may crack when the cavities in the refrigerators are filled with polyurethane foam as a result of the blowing agent utilized in the foam. Examples of suitable processes for preparing HIPS are described in US2010/240832 or in EP2632962.

Various approaches have been made to provide rubber reinforced monovinylaromatic polymers having good resistance to environmental stress cracking (*i.e.* good ESCR). These include the use of multi-layer sheet technology, increasing the amount of rubber, increasing gel phase volume, optimizing the rubber particle size, controlling the amount of cross linking of the rubber, optimizing the process, the use of additives such as polypropylene, polybutylene, and ethylene/$\alpha$-olefin copolymers, and the use of high molecular weight rubber.

Some years ago, it was found that the addition of 1 to 3 wt% polyisobutene (PIB) in HIPS was boosting ESCR properties. However, there is a continuing interest to find solutions to upgrade the ESCR performance and overall property combinations of HIPS and similar materials that do not reduce the degrees of freedom within the process of making and moulding the polymer, or reduce the qualities of the polymer itself.

US4388443 describes polyblends comprising a polylactone, a polycarbonate and a rubber-modified styrenic copolymer. The examples show an improvement of toughness when polycarbonate and polylactone are both present in the polyblend.

JP2008050426 describes a resin composition comprising from 95-50 wt% of polystyrene and from 5-50 wt% of polylactic acid. EP 0 770 632 discloses HIPS compositions with around 8% rubber wherein the additive polyisobutylene is present. The aim of EP 0 770 632 is improved environmental stress crack resistance (ESCR).

There is an interest to find solutions to enhance the ESCR of rubber-modified monovinylaromatic polymers which can be cost effective, for example in that the additive content is kept as low as possible.

There is also an interest to find solutions to enhance the ESCR of rubber-modified monovinylaromatic polymers with additives from renewable resources.

Thus, an object of the invention is to provide rubber-modified monovinylaromatic polymers compositions with improved stress crack resistance properties (ESCR).

It is also an object of the invention to provide rubber-modified monovinylaromatic polymers compositions with improved stress crack resistance properties and improved processability.

It is a further object of the invention to provide rubber-modified monovinylaromatic polymers compositions with improved stress crack resistance properties and improved processability, wherein the improved stress crack resistance properties include improved retention in elongation after contact with cyclopentane and/or improved retention in elongation after being mixed with up to 50 wt% of its own regrinds.

**Summary of the invention**

According to a first aspect, the invention provides a composition comprising a rubber-modified monovinylaromatic polymer comprising:

-    70 wt% or more of a monovinylaromatic polymer matrix, based on the total weight of the rubber-modified monovinylaromatic polymer;
-    from 0.5 to 20 wt% of at least one rubber, based on the total weight of the rubber-modified monovinylaromatic polymer; and
-    from 0.1 to 4.8 wt% of at least one biopolymer based on the total weight of the rubber-modified monovinylaromatic polymer, wherein the at least one biopolymer is selected from poly($\alpha$-hydroxyacids) and/or polyhydroxyalkanoates;

with the at least one rubber and the at least one biopolymer being in a dispersed phase within the monovinylaromatic polymer matrix;

and further wherein the composition comprises from 0.1 to 6.0 wt% of a plasticizer based on the total weight of the composition, the plasticizer being selected from a mineral oil and/or polyisobutene.

Preferably, the invention provides a composition comprising a rubber-modified monovinylaromatic polymer comprising:

- 70 wt% or more of a monovinylaromatic polymer matrix, based on the total weight of the rubber-modified monovinylaromatic polymer;
- from 0.5 to 20 wt% of at least one rubber, based on the total weight of the rubber-modified monovinylaromatic polymer; and
- from 0.1 to 4.8 wt% of at least one biopolymer based on the total weight of the rubber-modified monovinylaromatic polymer, wherein the at least one biopolymer is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof;

with the at least one rubber and the at least one biopolymer being in a dispersed phase within the monovinylaromatic polymer matrix;

and further wherein the composition comprises from 0.1 to 6.0 wt% of a plasticizer based on the total weight of the composition, the plasticizer being selected from a mineral oil and/or polyisobutene.

Surprisingly, it has been found by the inventors that compositions comprising low concentrations of a biopolymer showed improved ESCR properties compared to similar compositions devoid of such biopolymer.

Monovinylaromatic polymer compositions comprising a polymer made from renewable resources (*i.e.* a biopolymer) as a dispersed phase are already known from the document WO2008/119668. The examples disclose "reactor blends" of polystyrene (PS) and polylactic acid (PLA) and of HIPS and PLA. However, this document is silent regarding the ESCR properties that can be obtained by the disclosed compositions, and therefore is silent regarding any possibility to improve said ESCR by addition of at least one biopolymer at low concentration.

With preference, one or more of the following features can be used to further define the inventive composition:

- The rubber-modified monovinylaromatic polymer is a rubber-modified monovinylaromatic homopolymer or a rubber-modified monovinylaromatic copolymer.
- The at least one biopolymer is present in an amount of at least 0.3 wt% based on the total weight of the rubber-modified monovinylaromatic polymer, preferably of at least 0.4 wt %, preferably of at least 0.8 wt%, preferably of at least 1.0 wt%.
- The at least one biopolymer is present in an amount of at most 4.6 wt% based on the total weight of the rubber-modified monovinylaromatic polymer, preferably at most 4.5 wt%, preferably at most 4.2 wt%, preferably at most 4.0 wt%, preferably of at most 3.8 wt%, more preferably of at most 3.6 wt%, and even more preferably of at most 3.5 wt %.
- The at least one biopolymer is selected from polylactic acid (PLA), poly-3-hydroxybutyrate (P3HB), polyhydroxyvalerate (PHV), polyhydroxyoctanoate (PHO) and their copolymers, and any combination thereof.
- The biopolymer is polylactic acid (PLA).
- The biopolymer is polylactic acid and has a melt index $MI_2$ of at least 1.0 g/10 min, preferably of at least 3.0 g/10 min, more preferably of at least 4.0 g/10 min, even more preferably at least 5.0 g/10 min, as determined at 210 °C under a 2.16 kg load in accordance with ASTM D1238.
- The biopolymer is polylactic acid and has a melt index $MI_2$ of at most 100.0 g/10 min, preferably of at most 50.0 g/10 min, more preferably of at most 20.0 g/10 min, and even more preferably of at most 10 g/10 min as determined at 210 °C under a 2.16 kg load in accordance with ASTM D1238.
- The biopolymer is polylactic acid and has a weight average molecular weight (Mw) of at least 5 kDa, more preferably at least 30 kDa, even more preferably of at least 50 kDa and most preferably at least 80 kDa.
- The biopolymer is polylactic acid and has a weight average molecular weight (Mw) of at most 300 kDa, more preferably at most 280 kDa, even more preferably of at most 250 kDa.
- The biopolymer is polylactic acid and has a weight average molecular weight (Mw) of at least 5 kDa and at most 300 kDa, more preferably at least 30 kDa and at most 300 kDa, even more preferably of at least 50 kDa and at most 280 kDa, most preferably at least 80 kDa and at most 250 kDa.
- The biopolymer is polylactic acid and is a semicrystalline polylactic acid exhibiting a D-lactic acid stereoisomer content ranging from 2 to 6 mol %, preferably ranging from 3 to 5 mol %.
- The rubber and the biopolymer particles have a surface average diameter D50(s) of at least 2.0 $\mu$m as determined by scanning electron microscopy (SEM) analysis, preferably at least 2.5 $\mu$m, more preferably at least 2.8 $\mu$m, even more preferably at least 3.0 $\mu$m and most preferably of at least 3.2 $\mu$m.

- The rubber and the biopolymer particles have a surface average diameter D50(s) of at most 12.0 $\mu$m as determined by scanning electron microscopy (SEM) analysis, preferably at most 10.0 $\mu$m, more preferably at most 9.0 $\mu$m and even most preferably of at most 8.0 $\mu$m.
- The composition further comprises lactide, in amounts ranging from 0.1 to 4.0 wt% of the total weight of the composition, preferably from 0.2 to 2.5 wt%.
- The composition comprises a plasticizer being a mineral oil and/or polyisobutene, in amounts ranging from 0.5 to 5.0 wt% of the total weight of the composition, preferably from 1.0 wt% to 4.0 wt%, more preferably from 1.0 wt% to 3.5 wt%.
- The weight ratio of the plasticizer to the at least one biopolymer in the composition is at most 1:50, preferably at most 1:10, more preferably at most 1:4, even more preferably at most 1:3.
- The weight ratio of the plasticizer to the at least one biopolymer in the composition is at least 1:0.02, preferably at least 1:0.2, more preferably at least 1:0.5.
- The composition comprises a plasticizer being polyisobutene.
- The composition comprises a plasticizer, being a mineral oil and having a kinematic viscosity ranging from 65 to 100 $mm^2$/s according to ISO 3104, preferably ranging from 65 to 75 $mm^2$/s.
- The rubber-modified monovinylaromatic polymer is a rubber-modified polystyrene (HIPS) or a rubber-modified poly(styrene-acrylonitrile) (ABS).
- The rubber-modified monovinylaromatic polymer comprises a rubber selected from the group consisting of polybutadiene, polyisoprene, copolymers of butadiene and/or isoprene with styrene and natural rubber.
- The rubber in the rubber-modified monovinylaromatic polymer is present in an amount of at most 20.0 wt% based on the weight of the rubber-modified monovinylaromatic polymer, preferably of at most 18.0 wt%, preferably of at most 15.0 wt%, more preferably of at most 13.0 wt% and most preferably of at most 11.0 wt%.
- The rubber in the rubber-modified monovinylaromatic polymer is present in an amount of at least 0.5 wt% based on the weight of the rubber-modified monovinylaromatic polymer, preferably of at least 2.0 wt%, more preferably of at least 4.0 wt% and most preferably of at least 5.0 wt% or at least 6.0 wt% or at least 6.5 wt%.
- The rubber is polybutadiene and the rubber is present in an amount ranging from 2.0 to 18.0 wt% based on the weight of the rubber-modified monovinylaromatic polymer, preferably from 4.0 to 15.0 wt%, most preferably from 5.0 to11.0 wt%.
- The weight average molecular weight (Mw) of the monovinylaromatic polymer matrix is at least 130,000 g/mol, preferably at least 140,000 g/mol, and more preferably at least 150,000 g/mol.
- The molecular weight distribution (Mw/Mn) of the monovinylaromatic polymer matrix is at least 2.0, preferably at least 2.1.
- The molecular weight distribution of the monovinylaromatic polymer matrix is at most 5.0, more preferably at most 4.0, and most preferably at most 3.5.
- The composition has a melt index $MI_5$ as determined at 200 °C under a 5 kg load in accordance with ISO 1133H, ranging from 1 to 25 g/10 min.
- The composition has a melt index $MI_5$ of at least 1 g/10 min, preferably of at least 2 g/10 min, more preferably of at least 4 g/10 min, even more preferably of at least 5 g/10 min, as determined at 200 °C under a 5 kg load in accordance with ISO 1133H.
- The composition has a melt index $MI_5$ of at most 25 g/10 min, preferably of at most 20 g/10 min, more preferably of at most 18 g/10 min, even more preferably of at most 15 g/10 min, and most preferably of at most 11 g/10 min as determined at 200 °C under a 5 kg load in accordance with ISO 1133H.
- The composition shows a normalized elongation at break of at least 40 % after seven days under cracking agent and stress as determined according to the Dow Bar test on specimens shaped in accordance with ISO 527 1A.

According to a second aspect, the invention provides a process for preparing a rubber-modified monovinylaromatic polymer composition as defined according to the first aspect of the invention, said process comprising the step of polymerizing a reaction mixture of monovinylaromatic monomer, one or more rubber, one or more biopolymer and at least one plasticizer selected from a mineral oil and/or polyisobutene, wherein the one or more biopolymer is present in an amount of from 0.1 to 10.0 wt% based on the total weight of the reaction mixture, and further wherein at least one biopolymer is selected from poly($\alpha$-hydroxyacids) and/or polyhydroxyalkanoates, preferably is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof.

In an embodiment of the invention, the process comprises the following steps

a) feeding a reaction mixture comprising:

- at least one monovinylaromatic monomer,

- at least one rubber, at least one biopolymer, wherein the at least one biopolymer is selected from poly(α-hydroxyacids) and/or polyhydroxyalkanoates, preferably is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof;
- at least one plasticizer selected from a mineral oil and/or polyisobutene, and
- an optional free radical initiator
  to a phase-inversion reactor and polymerizing the reaction mixture in the phase-inversion reactor to above an inversion point of the reaction mixture to produce a first polymerization mixture comprising both rubber and biopolymer particles;

b) feeding the first polymerization mixture to a polymerization reactor to produce a second polymerization mixture;
c) optionally feeding the second polymerization mixture into at least one subsequent reactor for post-inversion polymerization of the third polymerization mixture;

further wherein the reaction mixture comprises at least one monovinylaromatic monomer, at least one rubber and at least one biopolymer in proportions effective to produce a composition comprising a rubber-modified monovinylaromatic polymer comprising:

- 70 wt% or more of a monovinylaromatic polymer matrix, based on the total weight of the rubber-modified monovinylaromatic polymer,
- from 0.5 to 20 wt% of at least one rubber, based on the total weight of the rubber-modified monovinylaromatic polymer,
- from 0.1 to 10.0 wt% of at least one biopolymer based on the total weight of the rubber-modified monovinylaromatic polymer;

and from 0.1 to 6.0 wt% of a plasticizer based on the total weight of the composition, the plasticizer being selected from a mineral oil and/or polyisobutene.

In an embodiment, the one or more biopolymer is present in an amount of at most 8.0 wt% based on the total weight of the reaction mixture, preferably of at most 6.0 wt%, more preferably of at most 5.0 wt%, even more preferably of at most 4.8 wt%, and most preferably of at most 4.5 wt% or at most 4.0 wt%.

Preferably step a) is performed in two or more stages comprising:

a1) feeding a reaction mixture comprising at least one monovinylaromatic monomer, at least one rubber, at least one biopolymer, at least one plasticizer selected from a mineral oil and/or polyisobutene, and an optional free radical initiator to a pre-inversion reactor, and polymerizing the reaction mixture in the reactor to a point below an inversion point of the reaction mixture to produce a pre-polymerization mixture;
a2) feeding the pre-polymerization mixture to a phase-inversion reactor and polymerizing the pre-polymerization mixture to above an inversion point of the pre-polymerization mixture to produce a first polymerization mixture.

With preference, one or more of the following features can be used to further define the inventive process according to the second aspect or its embodiments:

- The reaction mixture is prepared by dissolving separately the at least one rubber to form a dissolved rubber feed solution and the at least one biopolymer to form a dissolved biopolymer feed solution, and adding the dissolved biopolymer feed solution to the dissolved rubber feed solution, with the plasticizer being dissolved separately or together with the at least one rubber and/or with the at least one biopolymer, and optionally a free radical initiator to form the reaction mixture.
- The reaction mixture is prepared by dissolving the at least one rubber to form a dissolved rubber feed solution, adding the at least one biopolymer to the dissolved rubber feed solution and dissolving the at least one biopolymer in the presence of the dissolved rubber feed solution, with the plasticizer being dissolved separately or together with the at least one rubber and/or with the at least one biopolymer, and adding an optional free radical initiator to form the reaction mixture.
- The reaction mixture is prepared by dissolving the at least one biopolymer to form a dissolved biopolymer feed solution, adding the at least one rubber to the dissolved biopolymer feed solution and dissolving the at least one rubber in the presence of the dissolved biopolymer feed solution, with the plasticizer being dissolved separately or together with the at least one rubber and/or with the at least one biopolymer, and optionally adding a free radical initiator to form the reaction mixture.
- The reaction mixture is prepared by dissolving simultaneously the at least one biopolymer and the at least one rubber to form a dissolved solution containing rubber and biopolymer with the plasticizer being dissolved separately or together with the at least one rubber and with the at least one biopolymer, and optionally adding a free radical initiator to form the reaction mixture.

- The reaction mixture further comprises at least one additive selected from lactide, a flame retardant, a filler, and a polymer different from monovinylaromatic polymer and different from the at least on biopolymer; preferably the reaction mixture comprises at least one additive selected from lactide and a plasticizer wherein the plasticizer is selected from mineral oil and/or polyisobutene; and said additives are dissolved separately or together with the at least one rubber and/or with the at least one biopolymer.

According to a third aspect, the invention provides an article comprising the composition as defined according to the first aspect of the invention and/or prepared according to the second aspect of the invention.

Preferably the article is selected from films, fibres, sheet structures, moulded objects, automobile parts, hoses, refrigerator and other liners, clothing and footwear components and gaskets, more preferably the article is selected from refrigerator liners and automobile parts.

According to a fourth aspect, the invention provides a process for producing an article according to the third aspect of the invention, said process including:

- a step of extruding and/or thermoforming an article, or
- a step of injecting an article,

using the composition as defined according to the first aspect of the invention and/or prepared according to the second aspect of the invention.

## Description of the figures

Figure 1 is a graphic showing the results of the Dow Bar test for inventive and comparative compositions.

Figures 2A and 2B are the $^1$H-NMR spectra of an inventive resin, respectively treated with a global and a local baseline. Integrated areas that are useful for the determination of the resin composition are indicated in these figures.

Figure 3 is a graphic showing the results of the Dow Bar test for inventive and comparative compositions

## Detailed description of the invention

For the purpose of the invention the following definitions are given:
As used herein, a "polymer" is a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, e.g. terpolymers, tetrapolymers, etc.

As used herein, "blend", "polymer blend" and like terms refer to a composition of two or more compounds, typically two or more polymers. As used herein, "blend" and "polymer blend" also include "reactor blends," such as where a monomer is polymerized in the presence of a polymer. For example, the blend may initially be a blend of a first polymer and one or more monomers which are then polymerized to form a second polymer. A blend may or may not be miscible. A blend may or may not be phase separated. A blend may or may not contain one or more domain configurations, as determined from scanning electron spectroscopy, light scattering, x-ray scattering, or any other method known in the art. Preferred blends (e.g. preferred reactor blends) include two or more phases. For example the blend or the composition may include a first phase including some or all of the monovinylaromatic polymer and a second phase including some or all of the rubber and of the biopolymer.

As used herein, the terms "polylactic acid" or "polylactide" or "PLA" are used interchangeably and refer to poly(lactic acid) polymers comprising repeat units derived from lactic acid.

As used herein, "composition" and like terms mean a mixture or blend of two or more components. The composition of this invention is the rubber-modified monovinylaromatic polymer including the at least one biopolymer. The composition may include other components, polymeric or non-polymeric (e.g., additives), necessary or desirable to the end use of the composition.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

The composition

The invention relates a composition comprising a rubber-modified monovinylaromatic polymer comprising:

- 70 wt% or more of a monovinylaromatic polymer matrix, based on the total weight of the rubber-modified monovinylaromatic polymer,
- from 0.5 to 20 wt% of at least one rubber, based on the total weight of the rubber-modified monovinylaromatic polymer, and
- from 0.1 to 4.8 wt% of at least one biopolymer based on the total weight of the rubber-modified monovinylaromatic polymer, wherein the at least one biopolymer is selected from poly($\alpha$-hydroxyacids) and polyhydroxyalkanoates, preferably among these latter the at least one biopolymer is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof;

with the at least one rubber and the at least one biopolymer being in a dispersed phase within the monovinylaromatic polymer matrix,
and further wherein the composition comprises from 0.1 to 6.0 wt% of a plasticizer based on the total weight of the composition, the plasticizer being selected from a mineral oil and/or polyisobutene.

In an embodiment, the composition has a melt index $MI_5$ as determined at 200 °C under a 5 kg load in accordance with ISO 1133H, ranging from 1 to 25 g/10 min, preferably from 2 to 11 g/10 min.

Preferably, the composition has a melt index $MI_5$ of at least 2 g/10 min, preferably of at least 4 g/10 min, more preferably of at least 5 g/10 min, as determined at 200 °C under a 5 kg load in accordance with ISO 1133H.

Preferably, the composition has a melt index $MI_5$ of at most 20 g/10 min, preferably of at most 18 g/10 min, more preferably of at most 15 g/10 min, and most preferably of at most 11 g/10 min as determined at 200 °C under a 5 kg load in accordance with ISO 1133H.

Preferably, the composition shows a normalized elongation at break of at least 40 % after seven days under cracking agent and stress as determined according to the Dow Bar test on test specimens shaped in accordance with ISO 527 1A.

As it will be seen, it has surprisingly been found that the present invention provides a composition with improved ESCR combined with good processability.

The monovinylaromatic polymer matrix

Monovinylaromatic polymers (*e.g.* homopolymers and copolymers) are produced by polymerizing monovinylaromatic monomers (*e.g.* any aromatic having a vinyl function). By way of example, monovinylaromatic monomers are one or more from styrene, vinyl toluene, alphamethylstyrene, alphaethylstyrene, methyl-4-styrene, methyl-3-styrene, methoxy-4-styrene, hydroxymethyl-2-styrene, ethyl-4-styrene, ethoxy-4-styrene, dimethyl-3,4-styrene, chloro-2-styrene, chloro-3-styrene, chloro-4-methyl-3-styrene, tert.-butyl-3-styrene, dichloro-2,4-styrene, dichloro-2,6-styrene, vinyl-1-naphthalene and vinylanthracene. It would not depart from the scope of the invention to use more than one monovinylaromatic monomer. Preferably, the monovinylaromatic monomer includes or consists of styrene.

The monovinylaromatic polymer is the monovinylaromatic polymer matrix in the rubber-modified monovinylaromatic polymer. The concentration of the monovinylaromatic monomers (*e.g.* the concentration of styrene) preferably is about 60 wt% or more, more preferably about 65 wt% or more, even more preferably about 70 wt% or more, even more preferably about 80 wt% or more, even more preferably about 90 wt% or more, and most preferably about 93 wt% or more, based on the total weight of the monovinylaromatic polymer.

The monovinylaromatic monomer can be copolymerized with one or more of a range of other copolymerizable monomers. Preferred comonomers include nitrite monomers such as acrylonitrile, methacrylonitrile and fumaronitrile;

(meth)acrylate monomers such as methyl methacrylate or n-butyl acrylate; maleic anhydride and/or n-aryl maleimides such as n-phenyl maleimide, and conjugated and nonconjugated dienes and alkyl esters of acrylic or methacrylic acid. Representative copolymers include styrene-acrylonitrile (SAN) copolymers.

The copolymers typically include the comonomer(s) at a concentration of 0.1 wt% or more, preferably 1 wt% or more, even more preferably 2 wt% or more, and most preferably 5 wt% or more, based on the weight of the copolymer. Typically, the copolymers include the comonomer(s) at a concentration of 40 wt% or less, preferably 35 wt% or less, and most preferably 30 wt% or less, based on the weight of the copolymer.

In a preferred embodiment, the rubber-modified monovinylaromatic polymer is a rubber-modified polystyrene (HIPS) or a rubber-modified poly(styrene-acrylonitrile) (ABS). More preferably, the rubber-modified monovinylaromatic polymer is a rubber-modified polystyrene (HIPS).

The molecular weight of the monovinylaromatic polymer may be characterized by the number average molecular weight (Mn), the weight average molecular weight (Mw), the z-average molecular weight (Mz), the molecular weight distribution (Mw/Mn), or any combination thereof.

The molecular weight of the monovinylaromatic polymer influences its mechanical strength. In the invention, the molecular weight should be sufficiently high so that the composition has good resistance to environmental stress cracking, despite having a low concentration of rubber (*e.g.* at most 20 wt% based on the total weight of the rubber-modified monovinylaromatic polymer) and/or a generally high concentration of monovinylaromatic polymer matrix (*e.g.* at least 70 wt% based on the total weight of the rubber-modified monovinylaromatic polymer).

In an embodiment, the weight average molecular weight (Mw) of the monovinylaromatic polymer is at least 130,000 g/mol, preferably at least 140,000 g/mol, and more preferably at least 150,000 g/mol. The weight average molecular weight of the monovinylaromatic polymer should be sufficiently low so that the material can be easily produced and/or processed. The weight average molecular weight of the monovinylaromatic polymer may be preferably at most 300,000 g/mol, more preferably at most 280,000 g/mol, even more preferably at most 260,000 g/mol, and most preferably at most 240,000 g/mol.

The molecular weight distribution (Mw/Mn) of the monovinylaromatic polymer is preferably at least 1.8, more preferably at least 2.0, even more preferably at least 2.1. The molecular weight distribution of the monovinylaromatic polymer preferably is at most 4.0, more preferably at most 3.5, even more preferably at most 3.0 and most preferably at most 2.5.

The monovinylaromatic polymer preferably has a z-average molecular weight (Mz) of at least 250,000 g/mol. The monovinylaromatic polymer preferably has a z-average molecular weight of at most 1,000,000 g/mol.

The rubber-modified monovinylaromatic polymer comprises 70 wt% or more of a monovinylaromatic polymer matrix, based on the total weight of the rubber-modified monovinylaromatic polymer, preferably 80 wt% or more of a monovinylaromatic polymer matrix, more preferably 90 wt% or more of a monovinylaromatic polymer matrix.

The rubber component

The monovinylaromatic polymer contains at least one rubber (*e.g.* elastomeric polymer) dispersed as rubber particles in the monovinylaromatic matrix. The rubber may be any rubber suitable for improving the impact resistance and/or the resistance to environmental stress cracking when present in a monovinylaromatic polymer matrix. The rubber preferably is an unsaturated rubbery polymer or other polymers capable of forming a graft copolymer during the polymerization of the monovinylaromatic polymer.

Exemplary rubbers include, but are not limited to ethylene-propylene rubber (EPR), ethylene-propylene-diene rubber (EPDM), polybutadiene, acrylonitrile-butadiene copolymer, polyisoprene, isoprene-acrylonitrile copolymer, styrene butadiene rubber (SBR), and copolymers having styrene blocks and natural rubber. More particularly, the copolymers having styrene blocks are advantageously copolymers with styrene blocks and blocks made of butadiene or isoprene or of a mixture butadiene /isoprene. These block copolymers can be linear block copolymers or star block copolymers, hydrogenated and/or functionalized. Preferably the rubber is selected from polybutadiene, polyisoprene, copolymers of butadiene and/or isoprene with styrene and natural rubber.

The rubber in the rubber-modified polymers of the invention is typically present in an amount of at most 20.0 wt% based on the weight of the rubber-modified polymer, preferably of at most 18.0 wt%, more preferably of at most 15.0 wt%, more preferably of at most 13.0 wt%, more preferably of at most 11 wt%. In general, the rubber is present in an amount of at least 0.5 wt% based on the weight of the rubber-modified polymer, preferably of at least 0.8 wt%, more preferably of at least 1.0 wt%, even more preferably of at least 2.0 wt%, most preferably of at least 4.0 wt% and even most preferably of at least 5.0 wt% or at least 6.0 wt% or at least 6.5 wt%. Typically, HIPS products contain less rubber than ABS products.

The rubber particles in the compositions according to the present invention, in order to provide sufficient initial toughness and sufficient ESCR, will have a surface average diameter D50(s) of at least 2.0 micrometer ("μm") as determined by scanning electron microscopy (SEM) analysis, preferably at least 2.5 μm, more preferably at least 2.8, even more preferably of at least 3.0 μm and most preferably of at least 3.2 μm.

Preferably, the rubber particles in the compositions according to the present invention have a surface average diameter D50(s) of at most 12 μm as determined by scanning electron microscopy (SEM) analysis, preferably at most 10 μm, more preferably at most 9 μm and most preferably at most 8 μm.

The biopolymer component

The rubber-modified monovinylaromatic polymer further comprises at least one biopolymer in a dispersed phase.

Biopolymer in the meaning of the invention is any polymer made by a natural or synthetic route from renewable resources. By way of example, any polymer made by a natural or synthetic route from renewable resources and belonging to polyhydroxy acids or polyhydroxyalkanoates and their copolymers can be considered, provided they contain per addition unit at least one labile hydrogen atom bonded to a carbon atom in the α-position of an oxygen atom and/or a carbonyl group.

With preference, the at least one biopolymer is selected from poly(α-hydroxyacids) and polyhydroxyalkanoates. Preferably among these latter the at least one biopolymer is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof. More preferably, the biopolymer is polylactic acid (PLA).

Polylactic acids suitable for the composition can be prepared according to any method known in the state of the art. The polylactic acids can be prepared by ring-opening polymerization of raw materials having required structures selected from lactide, which is a cyclic dimer of lactic acid, glycolide, which is a cyclic dimer of glycolic acid, and caprolactone and the like. Lactide includes L-lactide, which is a cyclic dimer of L-lactic acid, D-lactide, which is a cyclic dimer of D-lactic acid, meso-lactide, which is a cyclic dimer of D-lactic acid and L-lactic acid, and DL-lactide, which is a racemate of D-lactide and L-lactide. The PLA used in the present composition can be derived from L-lactic acid, D-lactic acid, meso-lactide, or a mixture thereof. A mixture of two or more polylactic acid polymers can be used.

The polylactide suitable for the composition can be amorphous polylactide. As used herein, the term "amorphous" refers to a solid that is non-crystalline and lacks the long-range order characteristics of a crystal. For polylactide, the polymerization of a racemic mixture of L- and D-lactides usually leads to the synthesis of poly-DL-lactide that is amorphous. When non-racemic mixtures are being polymerized, the degree of crystallinity of the resulting polymer may be controlled by the ratio of D to L enantiomers used and/or the type of catalyst used during the polymerization reaction.

Most commercially available PLA have a higher L-lactic acid content. When the D-lactic acid content increases, the degree of crystallinity, melting temperature, crystallization rate all decrease. PLA will show very little tendency to crystallize when the content of D-lactic acid exceeds 15 mol%. The PLA for the current invention preferably has an L-lactic acid content in the range of 85 mol % to 100 mol %. Examples of such PLA materials are 2500HP, 4032D, 2003D, 4043D and 700 ID from NatureWorks LLC.

Polylactic acid for use in the present composition can be prepared according to any known method such as the process described in documents WO1998/002480, WO 2010/081887, FR2843390, US5053522, US 5053485 or US5117008.

In an embodiment, the polylactic acid has a specific gravity of at least 1.228 g/cm$^3$ (= g/cc) to, for example of at least 1.230 g/cm$^3$, for example of at least 1.232 g/cm$^3$, for example of at least 1.235 g/cm$^3$, as determined in accordance with ASTM D792. In an embodiment, the polylactic acid has a specific gravity of at most 1.255 g/cm$^3$, for example of at most 1.250 g/cm$^3$, for example of at most 1.248 g/cm$^3$, for example of at most 1.245 g/cm$^3$, as determined in accordance with ASTM D792.

In an embodiment, the polylactic acid has a specific gravity of from about 1.228 g/cm$^3$ to about 1.255 g/cm$^3$, for example from about 1.230 g/cm$^3$ to about 1.250 g/cm$^3$, for example from about 1.232 g/cm$^3$ to about 1.248 g/cm$^3$, for example from about 1.235 g/cm$^3$ to about 1.245 g/cm$^3$, as determined in accordance with ASTM D792.

In an embodiment, the polylactic acid may exhibit a Notched Izod Impact of at least 5 J/m, for example of at least 8 J/m, for example of at least 10 J/m, as determined in accordance with ASTM D256. In another embodiment, the polylactic acid may exhibit a notched Izod impact of at most 43 J/m, for example of at most 32 J/m, for example of at most 27 J/m, as determined in accordance with ASTM D256. In another embodiment, the polylactic acid may exhibit a notched Izod impact of from about 5 J/m to about 43 J/m, for example of from about 8 J/m to about 32 J/m, for example of from about 10J/m to about 27 J/m, as determined in accordance with ASTM D256.

In an embodiment, the polylactic acid has a melt index MI$_2$ of at least 1.0 g/10 min, preferably at least 3.0 g/10 min, more preferably of at least 4.0 g/10 min, even more preferably of at least 5.0 g/10 min, as determined at 210 °C under a 2.16 kg load in accordance with ASTM D1238.

In an embodiment, the polylactic acid has a melt index MI$_2$ of at most 100.0 g/10 min, preferably of at most 50.0 g/10 min, more preferably of at most 20.0 g/10 min, and even more preferably of at most 10.0 g/10 min as determined at 210 °C under a 2.16 kg load in accordance with ASTM D1238.

In an embodiment, the polylactic acid has a weight average molecular weight (Mw) of at least 5 kDa, more preferably at least 30 kDa, even more preferably of at least 50 kDa and most preferably at least 80 kDa.

In an embodiment, the polylactic acid has a weight average molecular weight (Mw) of at most 300 kDa, more preferably at most 280 kDa, even more preferably of at most 250 kDa.

In another embodiment, the polylactic acid has a weight average molecular weight (Mw) of at least 5 kDa and at most 300 kDa, more preferably at least 30 kDa and at most 300 kDa, even more preferably of at least 50 kDa and at most 280 kDa, most preferably at least 80 kDa and at most 250 kDa.

In an embodiment, the polylactic acid is a semicrystalline polylactic acid exhibiting a D-lactic acid stereoisomer content ranging from 2 to 6 mol %, preferably ranging from 3 to 5 mol %.

In an embodiment, the polylactic acid may exhibit a crystalline melt temperature (Tc) of from 140 °C to 190 °C, for example from 145 °C to 185 °C, as determined in accordance with ASTM D3418.

In an embodiment, the polylactic acid may exhibit a tensile yield strength of from 27 MPa to 175 MPa, for example from 34 MPa to 103 MPa, for example from 37 MPa to 69 MPa, as determined in accordance with ASTM D882.

In an embodiment, the polylactic acid may exhibit a tensile elongation of from 0.5 % to 10 %, for example from 1 % to 8 %, for example from 3 % to 7 %, as determined in accordance with ASTM D882.

In accordance with the invention, the composition comprises from 0.1 to 4.8 wt% of at least one biopolymer, as based on the total weight of the rubber-modified monovinylaromatic polymer, wherein the wherein the at least one biopolymer is selected from poly($\alpha$-hydroxyacids) and/or polyhydroxyalkanoates, preferably the at least one biopolymer is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof.

Surprisingly, it has been found that addition of at least one biopolymer, and with preference the addition of PLA at low content in a rubber-modified monovinylaromatic polymer enhances the ESCR of the composition compared to similar compositions devoid of said biopolymer.

In a preferred embodiment, the at least one biopolymer is present in an amount of at least 0.3 wt% based on the total weight of the rubber-modified monovinylaromatic polymer, preferably of at least 0.4 wt%, more preferably of at least 0.8 wt%, even more preferably of at least 1.0 wt%, and most preferably of at least 1.1 wt%.

In another embodiment, the at least one biopolymer is present in an amount of at most 4.6 wt% based on the total weight of the rubber-modified monovinylaromatic polymer, preferably at most 4.5 wt%, preferably at most 4.2 wt%, preferably at most 4.0 wt%, preferably of at most 3.8 wt%, more preferably of at most 3.6 wt%, and even more preferably of at most 3.5 wt%.

The biopolymer particles in the compositions according to the present invention, in order to provide sufficient initial toughness and sufficient ESCR, will have a surface average diameter D50(s) of at least 2.0 micrometer ("$\mu$m") as determined by scanning electron microscopy (SEM) analysis, preferably at least 2.5 $\mu$m, more preferably at least 2.8, even more preferably of at least 3.0 $\mu$m and most preferably of at least 3.2 $\mu$m.

Preferably, the biopolymer particles in the compositions according to the present invention have a surface average diameter D50(s) of at most 12 $\mu$m as determined by scanning electron microscopy (SEM) analysis, preferably at most 10 $\mu$m, more preferably at most 9 $\mu$m and most preferably at most 8 $\mu$m.

More preferably, at least a part of the particles comprises both rubber and biopolymer and present the so-called salami morphology. Preferably, the biopolymer and rubber particles have a surface average diameter D50(s) of at least 2.0 micrometer ("$\mu$m") as determined by scanning electron microscopy (SEM) analysis, preferably at least 2.5 $\mu$m, more preferably at least 2.8, even more preferably of at least 3.0 $\mu$m and most preferably of at least 3.2 $\mu$m.

With preference, the biopolymer and rubber particles have a surface average diameter D50(s) of at most 12 $\mu$m as determined by scanning electron microscopy (SEM) analysis, preferably at most 10 $\mu$m, more preferably at most 9 $\mu$m and most preferably at most 8 $\mu$m.

With preference, the composition comprises biopolymer particles, rubber particles and biopolymer and rubber particles. All particles have the same surface average diameter D50(s).

Further additives of the composition

The compositions of this invention can further comprise one or more fillers and/or additives as long as they do not detrimentally affect the desired property combinations that are otherwise obtained or, preferably, they would improve one or more of the properties.

In an embodiment, the composition further comprises from 0.1 to 4.0 wt% of lactide based on the total weight of the composition.

Preferably, the concentration of lactide in the composition is greater than 0.2 wt%, preferably at least 0.5 wt% based on the total weight of the composition. The concentration of lactide, if employed, is at most 3.0 wt%, preferably at most 2.5 wt%, more preferably at most 2.0 wt%, and most preferably at most 1.5 wt%, based on the total weight of the composition.

Lactide is the product of thermal dimerization of lactic acid, itself produced by fermenting pure natural carbon substrates, such as glucose, saccharose or lactose; or by fermenting impure natural carbon substrates, such as starch, molasses and lactoserum.

Lactide can be present in the composition as generated from polylactic acid by the polymerization process used to produce the composition, when the biopolymer selected is PLA. It can also be added in known amounts using conventional equipment and techniques. Lactide may be used as an additive from renewable resources that can be used to increase the melt index of the compositions, and improve their processability.

In accordance with the invention, lactide is selected from L-lactic acid, D-lactic acid, or meso-lactide, or a mixture thereof.

The composition of the invention includes a plasticizer selected from a mineral oil and/or polyisobutene. Preferably, the concentration of the plasticizer (e.g., the concentration of the mineral oil and/or polyisobutene) is greater than 0.1 wt%, preferably at least 0.5 wt%, more preferably at least 0.8 wt%, preferably at least 1.0 wt%, preferably at least 1.5 wt% and most preferably at least 2.0 wt%, based on the total weight of the composition. The concentration of the plasticizer (e.g., the concentration of the mineral oil and /or polyisobutene), if employed, is preferably at most 6 wt%, more preferably at most 5 wt%, even more preferably at most 4 wt%, even more preferably at most 3.5 wt%, and most preferably at most 3 wt%, based on the total weight of the composition.

Mineral oils have a typical kinematic viscosity at 40 °C between 65 and 100 mm$^2$/s, preferably around 70 mm$^2$/s, as determined according to ISO 3104.

In an embodiment, the weight ratio of the plasticizer to the at least one biopolymer in the composition is at most 1:50, preferably at most 1:10, more preferably at most 1:4, even more preferably at most 1:3.

In an embodiment, the weight ratio of the plasticizer to the at least one biopolymer in the composition is at least 1:0.02, preferably at least 1:0.2, more preferably at least 1:0.5.

Still, other additives include flame retardants such as halogenated organic compounds. The composition can also contain additives such as, for example, antioxidants (e.g., hindered phenols such as, for example, IRGANOX™ 1076), mould release agents, processing aids other than mineral oil (such as other oils, organic acids such as stearic acid, metal salts of organic acids), colorants or pigments to the extent that they do not interfere with desired physical or mechanical properties of the compositions of the present invention.

The compositions of this invention can comprise polymers other than the monovinylaromatic polymers and the at least one biopolymer. Representative other polymers include, but are not limited to ethylene polymer (*e.g.*, low density polyethylene (LDPE), ultra-low density polyethylene (ULDPE), medium density polyethylene (MDPE), linear low density polyethylene (LLDPE), high density polyethylene (HDPE), homogeneously branched linear ethylene polymer, substantially linear ethylene polymer, graft-modified ethylene polymer, ethylene vinyl acetate interpolymer, ethylene acrylic acid interpolymer, ethylene ethyl acetate interpolymer, ethylene methacrylic acid interpolymer, ethylene methacrylic acid ionomer, and the like), conventional polypropylene (*e.g.* homopolymer polypropylene, polypropylene copolymer, random block polypropylene interpolymer and the like), polyether block copolymer (*e.g.* PEBAX), polyphenylene ether, copolyester polymer, polyester/polyether block polymer (*e.g.* HYTEL), ethylene carbon monoxide interpolymer (*e.g.,* ethylene/carbon monoxide (ECO), copolymer, ethylene/acrylic acid/carbon monoxide (EAACO) terpolymer, ethylene/methacrylic acid/carbon monoxide (EMAACO) terpolymer, ethylene/vinyl acetate/carbon monoxide (EVACO) terpolymer and styrene/carbon monoxide (SCO), polyethylene terephthalate (PET), chlorinated polyethylene, styrene-butadiene-styrene (SBS) interpolymer, styrene- ethylene-butadiene-styrene (SEBS) interpolymer, and the like and mixtures of two or more of these other polymers.

If the composition comprises one or more other polymers, then the other polymers typically are present in an amount of no more than 20 wt% of the total weight of the composition, preferably no more than 15 wt%, more preferably no more than 10 wt%, more preferably no more than 5 wt%, and most preferably no more than 2 wt% of the total weight of the composition.

The composition can comprise 0 to 50 wt% of fillers based on the total weight of the composition. Representative fillers include talc, calcium carbonate, organo-clay, glass fibres, marble dust, cement dust, feldspar, silica or glass, fumed silica, silicates, alumina, various phosphorus compounds, ammonium bromide, antimony trioxide, zinc oxide, zinc borate, barium sulfate, silicones, aluminum silicate, calcium silicate, titanium oxides, glass micro spheres, chalk, mica, clays, wollastonite, ammonium octamolybdate, intumescent compounds, expandable graphite, and mixtures of two or more of these materials. The fillers may carry or contain various surface coatings or treatments, such as silanes, fatty acids, and the like. These materials are added in known amounts to the skilled man in the art using conventional equipment and techniques.

Articles

The articles of the invention (*e.g.* made from the composition of the invention) are selected from films, fibres, sheet structures, moulded objects (such as appliance and automobile parts), hoses, refrigerator and other liners, clothing and footwear components, gaskets and the like. The articles are made by any forming and/or shaping process, *e.g.* extrusion, casting, injection moulding, blow moulding, thermoforming, etc.

Process to prepare the composition

Thus, the invention provides a process for preparing a rubber-modified monovinylaromatic polymer composition, said process comprising the step of polymerizing a reaction mixture of monovinylaromatic monomer, at least one rubber and at least one biopolymer wherein the at least one biopolymer is present in an amount of from 0.1 to 4.8 wt% based on the total weight of the rubber-modified monovinylaromatic polymer.

In an embodiment, the process of the invention comprises the following steps:

a) feeding a reaction mixture comprising:

- at least one monovinylaromatic monomer,
- at least one rubber, at least one biopolymer, wherein the at least one biopolymer is selected from poly($\alpha$-hydroxyacids) and/or polyhydroxyalkanoates, preferably is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof;
- at least one plasticizer selected from a mineral oil and/or polyisobutene, and
- an optional free radical initiator
  to a phase-inversion reactor and polymerizing the reaction mixture in the phase-inversion reactor to above an inversion point of the reaction mixture to produce a first polymerization mixture comprising both rubber and biopolymer particles;

b) feeding the first polymerization mixture to a polymerization reactor to produce a second polymerization mixture;
c) optionally feeding the second polymerization mixture into at least one subsequent reactor for post-inversion polymerization of the third polymerization mixture;

further wherein the reaction mixture comprises at least one monovinylaromatic monomer, at least one rubber and at least one biopolymer in proportions effective to produce a composition comprising a rubber-modified monovinylaromatic polymer comprising:

- 70 wt% or more of a monovinylaromatic polymer matrix, based on the total weight of the rubber-modified monovinylaromatic polymer,
- from 0.5 to 20 wt% of at least one rubber, based on the total weight of the rubber-modified monovinylaromatic polymer, and
- from 0.1 to 10.0 wt% of at least one biopolymer based on the total weight of the rubber-modified monovinylaromatic polymer;

and from 0.1 to 6.0 wt% of a plasticizer based on the total weight of the composition, the plasticizer being selected from a mineral oil and/or polyisobutene.
In an embodiment step a) is performed in two or more stages comprising:

a1) feeding a reaction mixture comprising at least one monovinylaromatic monomer, at least one rubber, at least one biopolymer, at least one plasticizer selected from a mineral oil and/or polyisobutene, and an optional free radical initiator to a pre-inversion reactor, and polymerizing the reaction mixture in the reactor to a point below an inversion point of the reaction mixture to produce a pre-polymerization mixture;
a2) feeding the pre-polymerization mixture to a phase-inversion reactor and polymerizing the pre-polymerization mixture to above an inversion point of the pre-polymerization mixture to produce a first polymerization mixture.

The first reaction mixture preferably comprises

- from 70 to 95 wt% of one or more monovinylaromatic monomer based on the total weight of the first reaction mixture,
- from 0.5 to 20 wt% of at least one rubber,
- from 0.1 to 10.0 wt% of at least one biopolymer,
- from 0.1 to 6.0 wt% of a plasticizer based on the total weight of the composition, the plasticizer being selected from a mineral oil and/or polyisobutene, and
- optionally from 0.01 wt% to 0.2 wt% of a free radical initiator.

The at least one biopolymer is selected from poly(α-hydroxyacids) and/or polyhydroxyalkanoates, preferably is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof.

In an embodiment, the at least one biopolymer is present in an amount of at most 8.0 wt% based on the total weight of the reaction mixture, preferably of at most 6.0 wt%, more preferably of at most 5.0 wt%, even more preferably of at most 4.8 wt%, and most preferably of at most 4.5 wt% or at most 4.0 wt%.

In an embodiment, the reaction mixture is prepared by dissolving separately the at least one rubber to form a dissolved rubber feed solution and the at least one biopolymer to form a dissolved biopolymer feed solution, and adding the dissolved biopolymer feed solution to the dissolved rubber feed solution and optionally to a free radical initiator to form the reaction mixture; wherein the plasticizer is dissolved separately and/or together with the at least one rubber and/or with the at least one biopolymer.

In another embodiment, the reaction mixture is prepared by dissolving the at least one rubber to form a dissolved rubber feed solution, adding the at least one biopolymer to the dissolved rubber feed solution and dissolving the at least one biopolymer in the presence of the dissolved rubber feed solution, and optionally adding a free radical initiator to form the reaction mixture; wherein the plasticizer is dissolved separately and/or together with the at least one rubber and/or with the at least one biopolymer. Preferably, the at least one biopolymer is added to the dissolved rubber in a pellet form, or in a powder form.

In a further embodiment, the reaction mixture is prepared by dissolving the at least one biopolymer to form a dissolved biopolymer feed solution, adding the at least one rubber to the dissolved biopolymer feed solution and dissolving the at least one rubber in the presence of the dissolved biopolymer feed solution, and optionally adding a free radical initiator to form the reaction mixture; wherein the plasticizer is dissolved separately and/or together with the at least one rubber and/or with the at least one biopolymer.

In another embodiment, the reaction mixture is prepared by dissolving simultaneously the at least one biopolymer and the at least one rubber to form a dissolved solution containing rubber and biopolymer and optionally adding a free radical initiator to form the reaction mixture; wherein the plasticizer is dissolved separately and/or together with the at least one rubber and the at least one biopolymer.

The plasticizer is dissolved separately or together with the at least one rubber and/or with the at least one biopolymer.

In an embodiment, the reaction mixture further comprises at least one additive selected from lactide, a flame retardant, a filler, and a polymer different from the monovinylaromatic polymer and different from the at least one biopolymer; preferably the reaction mixture comprises at least one additive selected from lactide and a plasticizer being mineral oil and/or polyisobutene. Said additives are dissolved separately or together with the at least one rubber and/or with the at least one biopolymer.

In an embodiment, the first reaction mixture comprises diluents such as ethylbenzene, toluene, xylene and combination thereof. In the first reaction mixture, the rubber is dissolved in one or more monovinylaromatic monomer, preferably being styrene.

The phase inversion phenomenon is well-known to the man skilled in the art and is here explained with the monovinylaromatic monomer being styrene. The first reaction mixture is polymerized under pre-inversion conditions wherein the continuous phase is a biopolymer-rubber-styrene solution and the discontinuous phase is styrene-polystyrene. As the reaction of styrene into polystyrene progresses and the amount of polystyrene increases, phase inversion occurs, after which the polystyrene/styrene mixture forms the continuous phase with rubber particles and biopolymer particles dispersed therein. This phase inversion leads to the formation of complex rubber particles and biopolymer particles in which the rubber and the biopolymer exist in the form of membranes surrounding occluded domains of polystyrene. This polymerization reaction can be held in one reactor as in step a) or in at least two reactors as in step a) when performed in at least two stages.

The adjustment of the rubber and biopolymer particle size is to be done through process parameter adjustments (solid content, peroxide, temperature, diluent content, etc.) mainly in this particular reactor as well as in the one upstream of it, if any. The adjustments parameters are well known to the man skilled in the art.

Typical free radical initiators include azo compounds and peroxides. Exemplary peroxides include tert-butyiperoxybenzoate, tert-butylperoxyacetate, di-tert-butylperoxide, dibenzoylperoxide, dilauroylperoxide, 1,1-bis-tert-butylperoxycyclohexane, 1,1,-bis -tert-butylperoxy-3,3,5- trimethylcyclohexane and dicumylperoxide.

The at least one pre-inversion reactor and the phase-inversion reactor can be individually selected from a plug-flow reactor (PFR) arranged vertically, a plug-flow reactor (PFR) arranged horizontally and a continuous stirred tank reactor (CSTR). In an embodiment, at least one of the pre-inversion reactor and the phase-inversion reactor is provided with agitators.

In an embodiment, the at least one pre-inversion reactor are operated at temperatures of at least 110 °C, preferably from 115 to 150 °C, more preferably from 120 to 140 °C, and most preferably from 125 to 135 °C.

With preference in step b) the first polymerization mixture is fed to a polymerization reactor which is plug-flow reactor (PFR).

In an embodiment, the rubber-modified monovinylaromatic polymer leaving the final polymerization or post-polymerization reactor is sent to a devolatizer to remove volatile components prior to an extrusion step. The devolatizer can include a preheater.

Thus, preferably the process further comprises the following steps:

d) a devolatizing step comprising feeding the mixed polymerization mixture to one or more devolatizer to remove volatile components and crosslink the rubber, and
e) optionally and extrusion step.

If the composition comprises mineral oil as a plasticizer, the same can be added to the reaction mixture or at any point in the polymerization process up and including the final polymerization reactor, as it is well-known to the man skilled in the art.

The process includes the control of the particle size of the rubber particles and the biopolymer particles, wherein said control includes the determination of the solid content in the phase inversion reactor in accordance according to methods well known in the art.

The invention will now be illustrated by the following, non-limiting illustrations of particular embodiments of the invention.

## EXAMPLES

**Test methods**

Molecular weight: The molecular weight may be measured using gel permeation chromatography. Different solvents can be used, a typical solvent is tetrahydrofuran. Polystyrene standards may be used for calibration.

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The Mw, Mz and Mn are typically determined by gel permeation chromatography using narrow polystyrene standards for calibration.

The molecular weight distribution (MWD or D) is then calculated as Mw/Mn.

The rubber glass transition is determined according to ASTM D-756-52T

D50(s) um and D50(v) um: The surface and volume average diameter of the rubber particles and of the biopolymer particles have been measured by laser light scattering using the particle size analyser HORIBA 920 from Horiba Scientific. The samples were suspended in methyl ethyl ketone at a concentration of about 1 wt%. Laser light scattering results have been confirmed by scanning electron microscopy (SEM).

The specific gravity of the polylactic acid is determined in accordance with ASTM D792.

Notched Izod impact of polylactic acid was determined according to ASTM D256 method A.

The melt index (MI2) of the polylactic acid is measured in accordance with ASTM D1238 at 210 °C under a load of 2.16 kg.

The weight average molecular weight (Mw) of the polylactic acid is measured with the same method used for PS.

Tensile yield strength and tensile elongation of the polylactic acid was determined in accordance with ASTM D882.

Kinematic Viscosity at 40 °C of the mineral oil (in $mm^2/s$) was determined according to ISO 3104.

The melt index of the composition is measured according to ISO 1133. For polystyrene, the melt index (MI5) is measured according to ISO 1133 conditions H at 200 °C under a load of 5 kg.

The content of PBu, mineral oil, PLA, lactide and PIB (wt%) in the resin was determined by $^1$H-NMR as follows: 100 mg of sample were weighted in a small bottle. 1 ml $CDCl_3$ and 1 drop of TMS (tetramethylsilane) were added in the bottle. The sample was shaken at room temperature (22 °C) until the solution was homogeneous. Then, the solution was transferred to a 5 mm NMR sample tube.

H standard NMR spectrum was recorded with 32 scans and a ninety degree pulse on a Bruker 400 MHz:

Time domain was 32k.
Sweep width: 15 ppm centered at 5.5 ppm
Interscan delay: 10s
Rotation speed: 20 Hz
Temperature: 25 °C

Exponential multiplication with a small line broadening factor (LB=0.3) could be applied before Fourier transform was performed. The spectrum was phased and a linear baseline correction was applied between 11 and -1 ppm.

TMS signal was assigned to 0 ppm.

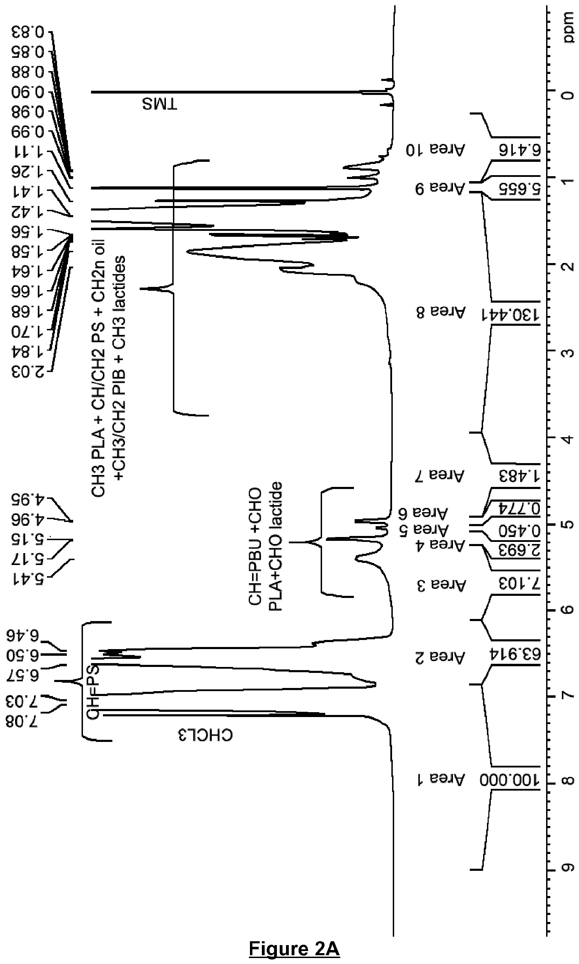

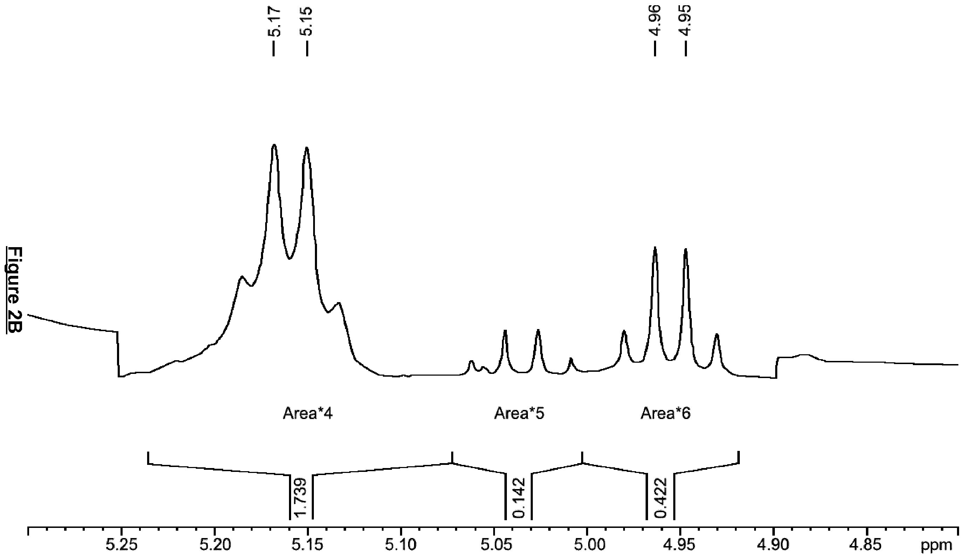

Signals were integrated (see Figures 2A and 2B) and normalized areas for each species were calculated from integrated areas. The composition is normalized to 100%.

Because of the superimposition of the PLA and the PBU signals, areas were measured in 2 steps.

The first one, after the global linear baseline correction between 11 and -1 ppm.

The second one, after a local baseline correction between 5.25 and 4.9 ppm.

Areas with no particular sign were measured after the global baseline correction and areas marked with * were measured after the local baseline correction. Both areas are included in the calculi.

$$PS\ area = (area\ 1 + area\ 2)/5$$

$$PBU\ area = (area\ 3 + area\ 4 + area\ 5 + area\ 6 + area\ 7 - area*4 - area*5 - area*6)\ /\ 2.1$$

$$PLA\ area = Area*4$$

$$Meso\text{-}LA\ area = Area*5$$

$$L\text{-}LA\ area = Area*6$$

$$PIB\ area = (Area\ 9)\ /\ 6$$

$$Oil\ area = (area\ 8 + area\ 10 - (3 \times (PS\ area + PLA\ area + meso\text{-}LA\ area + L\text{-}LA\ area) - 3.9 \times PBU\ area - 2 \times PIB\ area)\ /\ 2$$

$$\%(wt)\ PS = 100 \times 104 \times PS\ area\ /\ (104 \times PS\ area + 72 \times (PLA\ area + meso\text{-}LA\ area + L\text{-}LA\ area) + 14 \times Oil\ area + 56 \times PIB\ area)$$

%(wt) PBU = 100 x 54 x PBU area / (104 x PS area + 72 x (PLA area + meso-LA area + L-LA area) + 14 x Oil area + 56 x PIB area)

%(wt) PLA = 100 x 72 x PLA area / (104 x PS area + 72 x (PLA area + meso-LA area + L-LA area) + 14 x Oil area + 56 x PIB area)

%(wt) lactide = [100 x 72 x Meso-LA area / (104 x PS area + 72 x (PLA area + meso-LA area + L-LA area) + 14 x Oil area + 56 x PIB area) ] + [100 x 72 x L-LA area / (104 x PS area + 72 x (PLA area + meso-LA area + L-LA area) + 14 x Oil area + 56 x PIB area) ]

%(wt) mineral oil = 100 x 14 x Oil area / (104 x PS area + 72 x (PLA area + meso-LA area + L-LA area) + 14 x Oil area + 56 x PIB area)

%(wt) PIB = 100 x 56 x PIB area / (104 x PS area + 72 x (PLA area + meso-LA area + L-LA area) + 14 x Oil area + 56 x PIB area)

Vicat Softening temperature B50 was measured according to ISO 306 at a heating rate of 50 °C/hour and under a load of 50 N.

The Dow Bar test was used for determination of the environmental stress resistance of test specimens shaped as ISO 527 1A when subjected to a fixed flexural strain of 1.36 % in the presence of commercial olive oil (Puget). The result is the ratio of elongation at break between the stressed specimen and its initial elongation at break (e.g. normalized elongation at break). Typical stress durations are 1, 2, 3, 4 and 7 days.

Elongation at break (in example 3) was performed according to ISO 527-2.

RPVF: Rubber phase volume fraction. The resin was moulded into a board (50 x 50 x 2) mm and bars of (50 x 10 x 2) mm were stamped within this board. The following compression cycle was used to produce these specimens:

- 10 minutes at 170 °C under 20 bars
- 2 minutes at 170 °C under 200 bars
- Cooling at 10 °C/min to 30 °C at 200 bars.

The value of RPVF was determined by a dynamic rheology analysis in torsion mode on ARES (TA Instrument). A dynamic torsion was applied on the specimen with the temperature varying from -130 °C to 0 °C at a rate of 2 °C/min. Oscillation frequency was 1 Hz with a strain of 0.05 %.

Elastic modulus (G') and viscous modulus (G") values were recorded as a function of temperature.

RPVF was calculated according to Eq1:

$$\%RPVF = \left(\frac{R-1}{R+1.23}\right) \times 100 \;\; wherein \;\; R = \frac{G'_{(-130°c)}}{G'_{(-120°c)}} \quad [Eq.1]$$

Shrinkage was measured according to ISO 294-4 (150 °C, 15 min) on ISO 527-2 1A tensile bars.

## Examples

### Example 1

Polymerizations were carried out on bench reactor for compositions CE1, CE2, E1, E2 and E3 according to the recipe given in table 1.

CE1 and CE2 are comparative resin examples. CE1 is a HIPS devoid of PIB and of biopolymer. CE2 is a HIPS produced in presence of 1.2 wt% of PIB.

E1 and E2 were produced using respectively 1.2 wt% and 3.4 wt% of PLA. The PLA used was PLA 2003D commercially available from Nature Works.

PLA pellets were dissolved at 80 °C in styrene and the obtained solution was transferred in the reactor dissolver, where PBu was already dissolved. The polymerization was then conducted in usual conditions, starting at 70 °C.

E3 is the third example according to the invention produced with 3.4 wt% PLA2003D, as for E2 with the difference that for E3, the introduction of PLA was done directly in the reactor (a funnel had been installed in the reactor), following these 3 steps:

- PBu was dissolved in the reactor dissolver in standard conditions
- PBu dissolution was transferred to the reactor
- PLA pellets were introduced into the reactor (heated at 80 °C and stirred for 7-8 hours for proper PLA dissolution)

Then, the polymerization was carried out in usual conditions except that it started at 80 °C instead of 70 °C.

Other polymerization conditions were kept unchanged.

In all experiments, the rubber used was Buna CB550T from Lanxess. Buna CB550T is a low-cis medium viscosity Lithium butadiene rubber with a solution viscosity of 163 mPa.s as determined in 5.43 % toluene in accordance with ISO 3105.

The mineral oil used was Fina Vestan (kinematic viscosity at 40 °C of 68 mm$^2$/s according to ISO 3104).

The polylactic acid was PLA 2003D commercially available from NatureWorks. The PIB was PIB H100 commercially available from Ineos.

Table 1 shows the details of the compositions

Table 1: Recipe details

|  |  | CE1 | CE2 | E1 | E2 | E3 |
|---|---|---|---|---|---|---|
| Styrene | wt% | 82.7 | 81.5 | 80.3 | 78.1 | 78.1 |
| Ethylbenzene | wt% | 10.0 | 10.0 | 10.0 | 10.0 | 10.0 |
| Conc Rubber | wt% | 6.2 | 6.2 | 6.2 | 6.2 | 6.2 |
| conc PLA | wt% | 0 | 0 | 1.2 | 3.4 | 3.4 |
| Conc lactide | w% | 0 | 0 | 0 | 0 | 0 |
| conc Oil | wt% | 1.1 | 1.1 | 1.1 | 1.1 | 1.1 |
| conc PIB | wt% | 0 | 1.2 | 1.2 | 1.2 | 1.2 |
| Aox | type | IRG1076 | IRG1076 | IRG1076 | IRG1076 | IRG1076 |
| conc Aox | ppm | 800 | 700 | 700 | 700 | 700 |
| Mercaptan | type | NDM | NDM | NDM | NDM | NDM |
| conc Mercaptan | ppm | 250 | 250 | 250 | 250 | 250 |
| Initiator | type | Luperox 331 | Luperox 331 | Luperox 331 | Luperox 331 | Luperox 331 |
| conc Initiator | ppm | 225 | 225 | 225 | 225 | 225 |

The properties of the compositions are given in Table 2

Table 2: Composition characterization (PBu, PIB, PLA, lactide and MO quantified by NMR)

|  | CE1 | CE2 | E1 | E2 | E3 |
|---|---|---|---|---|---|
| PBU (%wt) | 8.0 | 8.1 | 7.6 | 7.2 | 6.7 |
| Oil (%wt) | 1.6 | 1.8 | 2.1 | 2 | 1.9 |
| PiB (%wt) | 0 | 1.1 | 1.2 | 1.2 | 1.3 |
| PLA (%wt) | 0 | 0 | 1.2 | 3.9 | 3.1 |
| lactide (%wt) | 0 | 0 | 0.6 | 0.6 | 1.0 |
| D50s (μm) | 3.6 | 3.1 | 3.2 | 4.4 | 4.3 |
| D50v (μm) | 5,3 | 5,6 | 6.3 | 8.2 | 7.3 |

(continued)

|  | CE1 | CE2 | E1 | E2 | E3 |
|---|---|---|---|---|---|
| MI5 (g/10') | 2.5 | 3.7 | 5.1 | 6.9 | 10.5 |
| Mn (kDa) | 73 | 76 | 75 | 67 | 72 |
| Mw (kDa) | 173 | 169 | 164 | 151 | 167 |
| Mz (kDa) | 290 | 284 | 277 | 268 | 309 |
| D | 2.4 | 2.2 | 2.2 | 2.3 | 2.3 |
| RPVF | 33.5 | 35 | 36.5 | 35.1 | 35.5 |
| RPVF/%Pbu | 4.2 | 4.3 | 4.8 | 4.9 | 5.3 |
| Vicat (°C) | 92.8 | 88.3 | 86.6 | 85.8 | / |
| Shrinkage (%) | 24.6 | 26.5 | 27.3 | 24.9 | 26.3 |

Lactide was detected on every composition with PLA. It is believed that shear and temperature (250 °C) in the static mixer and in the devolatilizer are the cause for lactide generation. It was also observed an increase of the MI5 of the composition containing the PLA compared to the resin devoid of PLA, whereas Mw was not modified. Particle size distribution is not modified by the addition of PLA in the resins.

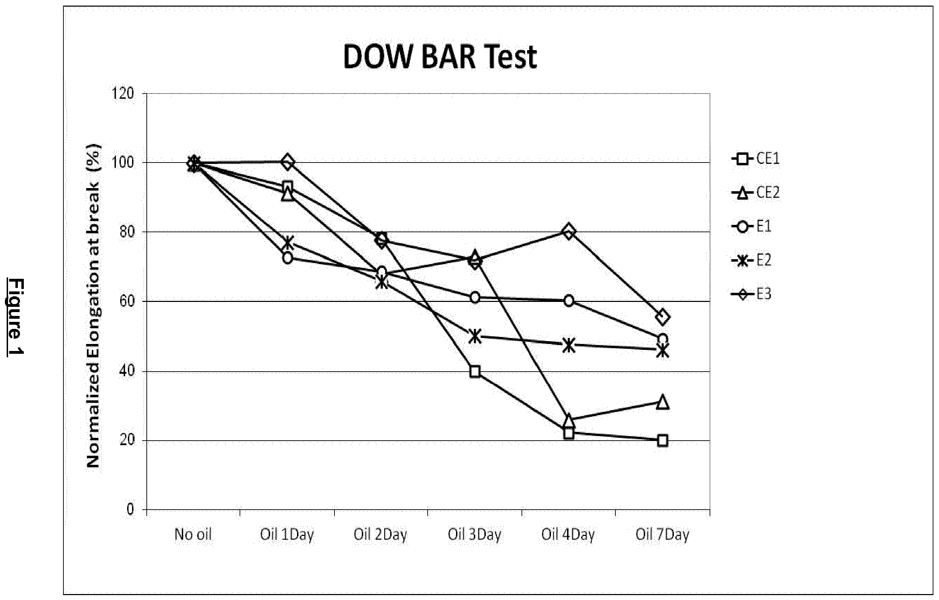

Product stress crack performances were evaluated via the Dow Bar Test. The results are displayed in Figure 1. An improvement of stress crack resistance for compositions comprising PLA is clearly seen, especially after 4 and 7 days of tests, in comparison with CE1 and CE2.
The presence of the PLA and the rubber in a dispersed phase was observed by SEM.

Example 2

The effect of the addition of lactide on processability has been studied by compounding a high impact polystyrene having a melt index (MI5) of 3.3 g/10 min as measured according to ISO 1133 conditions H at 200 °C under a load of 5 kg. The results showed an increase of the melt index to 3.9 g/10 min with a content of lactide in the blend of 0.2 wt% as determined by NMR, and to 6.0 g/10 min with a content of lactide in the blend of 2.4 wt% as determined by NMR.

The results demonstrate an improvement of the processability when lactide is present in a composition.

Example 3

A composition E4, according to the invention, was produced as a grade in a pilot plant.
The properties of the composition are given in table 3

Table 3: Composition characterization (PBu, PIB, PLA, lactide and MO quantified by NMR)

|  | E4 |
|---|---|
| PBU (%wt) | 7.8 |
| Oil (%wt) | 3 |
| PiB (%wt) | 1.7 |
| PLA (%wt) | 4.5 |
| lactide (%wt) | 0.7 |
| D50s (μm) | 6 |
| D50v (μm) | 9.7 |
| MI5 (g/10') | 4.4 |
| Mn (kDa) | 88 |
| Mw (kDa) | 203 |
| Mz (kDa) | 364 |

(continued)

|  | E4 |
| --- | --- |
| D | 2.3 |
| RPVF | 33.7 |
| RPVF/%PBu | 4.3 |
| Notched Izod impact (kJ/m$^2$) | 7.1 |

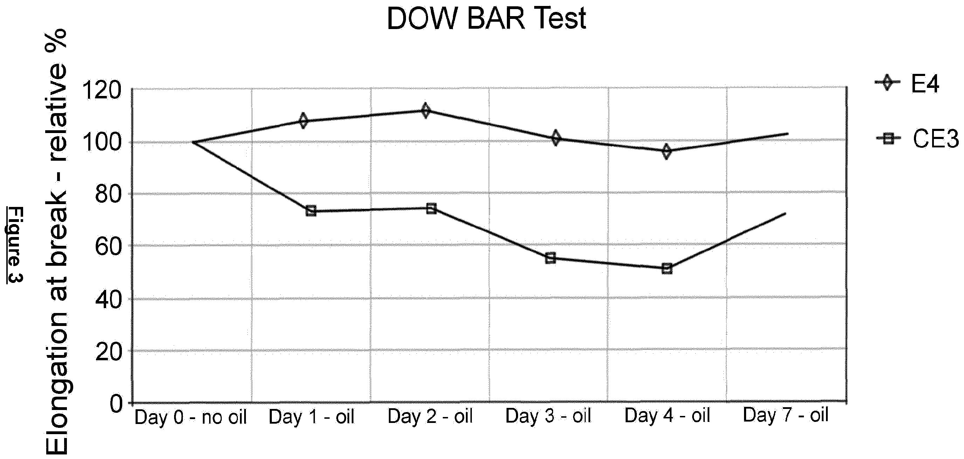

E4 was compared to an impact polystyrene devoid of biopolymer used here as comparative example CE3. CE3 is a commercially available impact polystyrene marketed by TOTAL under the commercial name "polystyrene impact 8260". CE3 has a melt flow index of 2.8 g/10 min (ISO 1133H: 200 °C - 5kg).
The comparative results of the Dow Bar Test are given in figure 3 and show the improved ESCR performance of the inventive composition E4.
Other tests were performed to test the effects of cyclopentane on ESCR properties. The test based on cyclopentane is carried out on specimens from extrusion sheets (not from injection moulded tensile bars as used in the Dow Bar Test).
Cut sheets are first extruded in the thickness of 0.1 mm. Test bars are then pressed (estampee) into dumbbell shape test bars and placed in a jig, in contact with the cyclopentane vapours for a period of 30 minutes. Elongation tests are then done on the specimens to measure the elongation retention after contact. The results are reported in table 4.

Table 4: Comparing E4 and CE3 before and after contact with cyclopentane

| Description | Before contact with cyclopentane | After contact with cyclopentane | Retention in elongation (%) |
| --- | --- | --- | --- |
|  | Elongation at Break (Average) in % | Elongation at Break (Average) in % |  |
| CE3 | 63.4 | 45.0 | 71.0 |
| E4 | 36.3 | 30.0 | 82.6 |

It was expected from the characteristics of the reactor blend E4 produced that initial elongation would be lower than for CE3. The aim of this test is to determine the elongation retention of the material after it has been subjected to the cyclopentane vapours. The improved elongation retention of E4 compared to CE3 demonstrates better ESCR properties, in line with the results of the Dow Bar Test.
The same test was performed but with E4 with 50% of its own regrinds and CE3 with 50% of its own regrinds. The results are reported in table 5.

Table 5: Comparing E4 with 50 wt% regrind and CE3 with 50 wt% regrind before and after contact with cyclopentane.

| Description | Before contact with cyclopentane | After contact with cyclopentane | Retention in elongation (%) |
| --- | --- | --- | --- |
|  | Elongation at Break (Average) in % | Elongation at Break (Average) in % |  |
| CE3/CE3 regrind (50/50) | 56.8 | 43.0 | 75.7 |
| E4/E4 regrind (50/50) | 35.1 | 30.3 | 86.3 |

From the results, an improvement can be seen in elongation retention for E4 with 50 wt% regrind compared to CE3 with 50 wt% regrind. Also, it can be seen up to 50 wt% of its own regrinds can be added to the inventive compassion E4 without deterioration of its ESCR properties and giving better ESCR results compared to CE3.

**Claims**

1. A composition comprising a rubber-modified monovinylaromatic polymer comprising:

   - 70 wt% or more of a monovinylaromatic polymer matrix, based on the total weight of the rubber-modified monovinylaromatic polymer,
   - from 0.5 to 20 wt% of at least one rubber, based on the total weight of the rubber-modified monovinylaromatic polymer, and
   - from 0.1 to 4.8 wt% of at least one biopolymer based on the total weight of the rubber-modified monovinylaromatic polymer, wherein the at least one biopolymer is selected from poly($\alpha$-hydroxyacids) and/or polyhydroxyalkanoates ;

   with the at least one rubber and the at least one biopolymer being in a dispersed phase within the monovinylaromatic polymer matrix;
   and further wherein the composition comprises from 0.1 to 6.0 wt% of a plasticizer based on the total weight of the composition, the plasticizer being selected from a mineral oil and/or polyisobutene.

2. The composition according to claim 1 **characterized in that** the at least one biopolymer is present in an amount of at least 0.3 wt% based on the total weight of the rubber-modified monovinylaromatic polymer, preferably of at least 0.8 wt%; and/or the at least one biopolymer is present in an amount of at most 4.6 wt% based on the total weight of the rubber-modified monovinylaromatic polymer, preferably of at most 4.2 wt%.

3. The composition according to any one of claims 1 or 2 **characterized in that** the at least one biopolymer is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof, with preference the biopolymer is polylactic acid (PLA).

4. The composition according to any one of claims 1 to 3 **characterized in that** the composition has a melt index $MI_5$ as determined at 200 °C under a 5 kg load in accordance with ISO 1133 condition H, of:

   - at least 1 g/10 min, preferably of at least 2 g/10 min, and/or
   - at most 25 g/10 min, preferably 20 g/10 min, more preferably of at most 18.0 g/10 min, more preferably of at most 15.0 g/10 min, and most preferably of at most 11.0 g/10 min.

5. The composition according to any one of claims 1 to 4 **characterized in that** the biopolymer is polylactic acid and **in that**:

   - the polylactic acid has a weight average molecular weight (Mw) of at least 5 kDa, more preferably at least 30 kDa, even more preferably of at least 50 kDa and most preferably at least 80 kDa, and/or
   - the polylactic acid has a weight average molecular weight (Mw) of at most 300 kDa, more preferably at most 280 kDa, even more preferably of at most 250 kDa.

6. The composition according to any one of claims 1 to 5 **characterized in that** the composition further comprises lactide, in amounts ranging from 0.1 to 4.0 wt% of the total weight of the composition.

7. The composition according to any one of claims 1 to 6 **characterized in that** the rubber and the biopolymer particles have a surface average diameter D50(s) of at least 2.0 $\mu$m as determined by scanning electron microscopy (SEM) analysis, preferably at least 2.5 $\mu$m.

8. The composition according to any one of claims 1 to 7 **characterized in that** the rubber-modified monovinylaromatic polymer is a rubber-modified polystyrene (HIPS) or a rubber-modified poly(styrene-acrylonitrile) (ABS).

9. The composition according to any one of claims 1 to 8 **characterized in that** the rubber is selected from the group consisting of polybutadiene, polyisoprene, copolymers of butadiene and/or isoprene with styrene and natural rubber; preferably the rubber is polybutadiene and the rubber is present in an amount ranging from 5.0 to 11.0 wt% based on the weight of the rubber-modified monovinylaromatic polymer.

10. The composition according to any one of claims 1 to 9 **characterized in that** the composition shows a normalized elongation at break of at least 40 % after seven days under cracking agent and stress as determined according to the Dow Bar test on specimens shaped in accordance with ISO 527 1A.

11. A process for preparing a rubber-modified monovinylaromatic polymer composition according to anyone of claims 1 to 10 comprising the step of polymerizing a reaction mixture of monovinylaromatic monomer, one or more rubber, one or more biopolymer and at least one plasticizer selected from a mineral oil and/or polyisobutene, wherein the one or more biopolymer is present in an amount of from 0.1 to 10.0 wt% based on the total weight of the reaction mixture, and further wherein at least one biopolymer is selected from poly($\alpha$-hydroxyacids) and/or polyhydroxyalkanoates, preferably is selected from polylactic acid (PLA), poly-3-hydroxybutyrate (P3HB), polyhydroxyvalerate (PHV), polyhydroxyhexanoate (PHH), polyhydroxyoctanoate (PHO) and their copolymers, and any combination thereof.

12. The process according to claim 11 **characterized in that** the reaction mixture is prepared by:

- dissolving separately the at least one rubber to form a dissolved rubber feed solution and the at least one biopolymer to form a dissolved biopolymer feed solution, and adding the dissolved biopolymer feed solution to the dissolved rubber feed solution, with the plasticizer being dissolved separately or together with the at least one rubber and/or with the at least one biopolymer, and optionally to a free radical initiator to form the reaction mixture; or
- dissolving the at least one rubber to form a dissolved rubber feed solution, adding the at least one biopolymer to the dissolved rubber feed solution and dissolving the at least one biopolymer in the presence of the dissolved rubber feed solution, with the plasticizer being dissolved separately or together with the at least one rubber and/or with the at least one biopolymer, and optionally adding a free radical initiator to form the reaction mixture, or
- dissolving the at least one biopolymer to form a dissolved biopolymer feed solution, adding the at least one rubber to the dissolved biopolymer feed solution and dissolving the at least one rubber in the presence of the dissolved biopolymer feed solution, with the plasticizer being dissolved separately or together with the at least one rubber and/or with the at least one biopolymer, and optionally adding a free radical initiator to form the reaction mixture, or
- dissolving simultaneously the at least one biopolymer and the at least one rubber to form a dissolved solution containing rubber and biopolymer, with the plasticizer being dissolved separately or together with the at least one rubber and with the at least one biopolymer, and optionally adding a free radical initiator to form the reaction mixture.

13. The process of claim 11 or 12 **characterized in that** the reaction mixture further comprises at least one additive selected from lactide, a flame retardant, a filler, and a polymer different from the monovinylaromatic polymer and different from the at least one biopolymer; preferably the reaction mixture comprises at least one additive selected from lactide and a plasticizer being mineral oil; and **in that** said additives are dissolved separately or together with the at least one rubber and/or with the at least one biopolymer.

14. An article comprising the composition according to any one of claims 1 to 10 or the composition as prepared by the process of any one of claims 11 to 13, preferably the article is selected from films, fibres, sheet structures, moulded objects, automobile parts, hoses, refrigerator and other liners, clothing and footwear components and gaskets, more preferably the article is selected from refrigerator liner and automobile parts.

15. A process for producing an article according to claim 14 **characterized in that** the process includes :

- a step of extruding and/or thermoforming an article, or
- a step of injecting an article,

using the composition according to any one of claims 1 to 10 or the composition as prepared by the process of any one of claims 11 to 13.

**Patentansprüche**

1. Zusammensetzung, umfassend ein kautschukmodifiziertes monovinylaromatisches Polymer, umfassend:

- 70 Gew.-% oder mehr einer monovinylaromatischen Polymermatrix, bezogen auf das Gesamtgewicht des kautschukmodifizierten monovinylaromatischen Polymers,

- 0,5 bis 20 Gew.-% mindestens eines Kautschuks, bezogen auf das Gesamtgewicht des kautschukmodifizierten monovinylaromatischen Polymers, und

- 0,1 bis 4,8 Gew.-% mindestens eines Biopolymers, bezogen auf das Gesamtgewicht des kautschukmodifizierten monovinylaromatischen Polymers, wobei das mindestens eine Biopolymer ausgewählt ist aus Poly($\alpha$-hydroxysäuren) und/oder Polyhydroxyalkanoaten; wobei der mindestens eine Kautschuk und das mindestens eine Biopolymer in der monovinylaromatischen Polymermatrix in einer dispergierten Phase vorliegen;

und wobei die Zusammensetzung ferner 0,1 bis 6,0 Gew.-% eines Weichmachers, bezogen auf das Gesamtgewicht der Zusammensetzung, umfasst, wobei der Weichmacher ausgewählt ist aus einem Mineralöl und/oder Polyisobuten.

2. Zusammensetzung nach Anspruch 1, **dadurch gekennzeichnet, dass** das mindestens eine Biopolymer in einer Menge von mindestens 0,3 Gew.-%, bezogen auf das Gesamtgewicht des kautschukmodifizierten monovinylaromatischen Polymers, vorzugsweise von mindestens 0,8 Gew.-%, vorliegt; und/oder dass das mindestens eine Biopolymer in einer Menge von höchstens 4,6 Gew.-%, bezogen auf das Gesamtgewicht des kautschukmodifizierten monovinylaromatischen Polymers, vorzugsweise von höchstens 4,2 Gew.-%, vorliegt.

3. Zusammensetzung nach einem der Ansprüche 1 oder 2, **dadurch gekennzeichnet, dass** das mindestens eine Biopolymer ausgewählt ist aus Polymilchsäure (PLA), Poly-3-hydroxybutyrat (P3HB), Polyhydroxyvalerat (PHV), Polyhydroxyhexanoat (PHH), Polyhydroxyoctanoat (PHO) und deren Copolymere und jedweder Kombination davon, wobei das Biopolymer vorzugsweise Polymilchsäure (PLA) ist.

4. Zusammensetzung nach einem der Ansprüche 1 bis 3, **dadurch gekennzeichnet, dass** die Zusammensetzung einen bei 200 °C unter einer Last von 5 kg gemäß ISO 1133, Bedingung H, bestimmten Schmelzindex $MI_5$ von:

- mindestens 1 g/10 min, vorzugsweise mindestens 2 g/10 min und/oder
- höchstens 25 g/10 min, bevorzugt 20 g/10 min, bevorzugter höchstens 18,0 g/10 min, noch bevorzugter höchstens 15,0 g/10 min und am meisten bevorzugt höchstens 11,0 g/10 min aufweist.

5. Zusammensetzung nach einem der Ansprüche 1 bis 4, **dadurch gekennzeichnet, dass** das Biopolymer Polymilchsäure ist und dass:

- die Polymilchsäure ein gewichtsmittleres Molekulargewicht (Mw) von mindestens 5 kDa, bevorzugter mindestens 30 kDa, noch bevorzugter mindestens 50 kDa und am meisten bevorzugt mindestens 80 kDa aufweist und/oder
- die Polymilchsäure ein gewichtsmittleres Molekulargewicht (Mw) von höchstens 300 kDa, bevorzugter höchstens 280 kDa, noch bevorzugter höchstens 250 kDa aufweist.

6. Zusammensetzung nach einem der Ansprüche 1 bis 5, **dadurch gekennzeichnet, dass** die Zusammensetzung ferner Lactid in Mengen im Bereich von 0,1 bis 4,0 Gew.-% des Gesamtgewichts der Zusammensetzung umfasst.

7. Zusammensetzung nach einem der Ansprüche 1 bis 6, **dadurch gekennzeichnet, dass** der Kautschuk und die Biopolymerpartikel einen durch Rasterelektronenmikroskopie (SEM)-Analyse bestimmten mittleren Oberflächendurchmesser D50(s) von mindestens 2,0 $\mu$m, vorzugsweise mindestens 2,5 $\mu$m, aufweisen.

8. Zusammensetzung nach einem der Ansprüche 1 bis 7, **dadurch gekennzeichnet, dass** das kautschukmodifizierte monovinylaromatische Polymer ein kautschukmodifiziertes Polystyrol (HIPS) oder ein kautschukmodifiziertes Poly(styrolacrylnitril) (ABS) ist.

9. Zusammensetzung nach einem der Ansprüche 1 bis 8, **dadurch gekennzeichnet, dass** der Kautschuk ausgewählt ist aus der Gruppe, bestehend aus Polybutadien, Polyisopren, Copolymeren von Butadien und/oder Isopren mit Styrol und Naturkautschuk; vorzugsweise der Kautschuk Polybutadien ist und der Kautschuk in einer Menge im Bereich von 5,0 bis 11,0 Gew.-%, bezogen auf das Gewicht des kautschukmodifizierten monovinylaromatischen Polymers, vorliegt.

10. Zusammensetzung nach einem der Ansprüche 1 bis 9, **dadurch gekennzeichnet, dass** die Zusammensetzung eine gemäß dem Dow-Bar-Test an gemäß ISO 527 1A geformten Probekörpern bestimmte normalisierte Bruchdehnung von mindestens 40 % nach sieben Tagen unter Reißmittel und Belastung zeigt.

11. Verfahren zum Herstellen einer kautschukmodifizierten monovinylaromatischen Polymerzusammensetzung nach einem der Ansprüche 1 bis 10, umfassend den Schritt des Polymerisierens eines Reaktionsgemisches aus monovinylaromatischem Monomer, einem oder mehreren Kautschuken, einem oder mehreren Biopolymeren und mindestens einem Weichmacher, der ausgewählt ist aus einem Mineralöl und/oder Polyisobuten, wobei das eine oder die mehreren Biopolymere in einer Menge von 0,1 bis 10,0 Gew.-%, bezogen auf das Gesamtgewicht des Reaktionsgemisches, vorliegen, und wobei ferner mindestens ein Biopolymer ausgewählt ist aus Poly($\alpha$-hydroxysäuren) und/oder Polyhydroxyalkanoaten, vorzugsweise ausgewählt ist aus Polymilchsäure (PLA), Poly-3-hydroxybutyrat (P3HB), Polyhydroxyvalerat (PHV), Polyhydroxyhexanoat (PHH), Polyhydroxyoctanoat (PHO) und deren Copolymeren und jedweder Kombination davon.

12. Verfahren nach Anspruch 11, **dadurch gekennzeichnet, dass** das Reaktionsgemisch wie folgt hergestellt wird:

- getrenntes Lösen des mindestens einen Kautschuks, um eine gelöste Kautschuk-Beschickungslösung zu bilden, und des mindestens einen Biopolymers, um eine gelöste Biopolymer-Beschickungslösung zu bilden, und Zugeben der gelösten Biopolymer-Beschickungslösung zu der gelösten Kautschuk-Beschickungslösung, wobei der Weichmacher getrennt oder zusammen mit dem mindestens einen Kautschuk und/oder mit dem mindestens einen Biopolymer gelöst wird, und gegebenenfalls zu einem Freiradikalstarter, um das Reaktionsgemisch zu bilden; oder
- Lösen des mindestens einen Kautschuks, um eine gelöste Kautschuk-Beschickungslösung zu bilden, Zugeben des mindestens einen Biopolymers zu der gelösten Kautschuk-Beschickungslösung und Lösen des mindestens einen Biopolymers in Gegenwart der gelösten Kautschuk-Beschickungslösung, wobei der Weichmacher getrennt oder zusammen mit dem mindestens einen Kautschuk und/oder mit dem mindestens einen Biopolymer gelöst wird, und gegebenenfalls Zugeben eines Freiradikalstarters, um das Reaktionsgemisch zu bilden, oder
- Lösen des mindestens einen Biopolymers, um eine gelöste Biopolymer-Beschickungslösung zu bilden, Zugeben des mindestens einen Kautschuks zu der gelösten Biopolymer-Beschickungslösung und Lösen des mindestens einen Kautschuks in Gegenwart der gelösten Biopolymer-Beschickungslösung, wobei der Weichmacher getrennt oder zusammen mit dem mindestens einen Kautschuk und/oder mit dem mindestens einen Biopolymer gelöst wird, und gegebenenfalls Zugeben eines Freiradikalstarters, um das Reaktionsgemisch zu bilden, oder
- gleichzeitiges Lösen des mindestens einen Biopolymers und des mindestens einen Kautschuks, um eine gelöste Lösung zu bilden, die Kautschuk und Biopolymer enthält, wobei der Weichmacher getrennt oder zusammen mit dem mindestens einen Kautschuk und dem mindestens einen Biopolymer gelöst wird, und gegebenenfalls Zugeben eines Freiradikalstarters, um das Reaktionsgemisch zu bilden.

13. Verfahren nach Anspruch 11 oder 12, **dadurch gekennzeichnet, dass** das Reaktionsgemisch ferner mindestens ein Additiv umfasst, das ausgewählt ist aus Lactid, einem Flammschutzmittel, einem Füllstoff und einem Polymer, das sich von dem monovinylaromatischen Polymer und von dem mindestens einen Biopolymer unterscheidet; dass vorzugsweise das Reaktionsgemisch mindestens ein Additiv umfasst, das ausgewählt ist aus Lactid und einem Weichmacher, der Mineralöl ist; und dass die Additive getrennt oder zusammen mit dem mindestens einen Kautschuk und/oder mit dem mindestens einen Biopolymer gelöst werden.

14. Gegenstand, umfassend die Zusammensetzung nach einem der Ansprüche 1 bis 10 oder die durch das Verfahren nach einem der Ansprüche 11 bis 13 hergestellte Zusammensetzung, wobei vorzugsweise der Gegenstand ausgewählt ist aus Folien, Fasern, Flächengebilden, Formgegenständen, Autoteilen, Schläuchen, Kühlschrank- und anderen Auskleidungen, Bekleidungs- und Schuhkomponenten und Dichtungen, bevorzugter der Artikel ausgewählt ist aus Kühlschrankauskleidungen und Autoteilen.

15. Verfahren zum Erzeugen eines Gegenstands nach Anspruch 14, **dadurch gekennzeichnet, dass** das Verfahren Folgendes beinhaltet:

- einen Schritt des Extrudierens und/oder Warmformens eines Gegenstands oder
- einen Schritt des Spritzgießens eines Gegenstands

unter Verwendung der Zusammensetzung nach einem der Ansprüche 1 bis 10 oder der durch das Verfahren nach einem der Ansprüche 11 bis 13 hergestellten Zusammensetzung.

**Revendications**

1. Composition comprenant un polymère monovinylaromatique modifié par un caoutchouc comprenant :

   - 70 % en poids ou plus d'une matrice polymère monovinylaromatique, par rapport au poids total du polymère monovinylaromatique modifié par un caoutchouc,
   - de 0,5 à 20 % en poids d'au moins un caoutchouc, par rapport au poids total du polymère monovinylaromatique modifié par un caoutchouc, et
   - de 0,1 à 4,8 % en poids d'au moins un biopolymère sur la base du poids total du polymère monovinylaromatique modifié par un caoutchouc, l'au moins un biopolymère étant choisi parmi les poly($\alpha$-hydroxyacides) et/ou les polyhydroxyalcanoates;

   l'au moins un caoutchouc et l'au moins un biopolymère étant dans une phase dispersée à l'intérieur de la matrice polymère monovinylaromatique ;
   et la composition comprenant en outre de 0,1 à 6,0 % en poids d'un plastifiant par rapport au poids total de la composition, le plastifiant étant choisi parmi une huile minérale et/ou un polyisobutène.

2. Composition selon la revendication 1, **caractérisée en ce que** l'au moins un biopolymère est présent en une quantité d'au moins 0,3 % en poids par rapport au poids total du polymère monovinylaromatique modifié par un caoutchouc, de préférence d'au moins 0,8 % en poids ; et/ou l'au moins un biopolymère est présent en une quantité d'au plus 4,6 % en poids par rapport au poids total du polymère monovinylaromatique modifié par un caoutchouc, de préférence d'au plus 4,2 % en poids.

3. Composition selon l'une quelconque des revendications 1 ou 2, **caractérisée en ce que** l'au moins un biopolymère est choisi parmi l'acide polylactique (PLA), le poly-3-hydroxybutyrate (P3HB), le polyhydroxyvalérate (PHV), le polyhydroxyhexanoate (PHH), le polyhydroxyoctanoate (PHO) et leurs copolymères et toute combinaison de ceux-ci, le biopolymère étant de préférence l'acide polylactique (PLA).

4. Composition selon l'une quelconque des revendications 1 à 3, **caractérisée en ce que** la composition a un indice de fluidité $MI_5$ déterminé à 200 °C sous une charge de 5 kg conformément à la norme ISO 1133, condition H, de :

   - au moins 1 g/10 min, de préférence d'au moins 2 g/10 min et/ou
   - au plus 25 g/10 min, de préférence 20 g/10 min, plus préférablement d'au plus 18,0 g/10 min, plus préférablement d'au plus 15,0 g/10 min et le plus préférablement d'au plus 11,0 g/10 min.

5. Composition selon l'une quelconque des revendications 1 à 4, **caractérisée en ce que** le biopolymère est l'acide polylactique et **en ce que** :

   - l'acide polylactique a une masse moléculaire moyenne en poids (Mw) d'au moins 5 kDa, de préférence d'au moins 30 kDa, ou mieux d'au moins 50 kDa et au mieux d'au moins 80 kDa, et/ou
   - l'acide polylactique a une masse moléculaire moyenne en poids (Mw) d'au plus 300 kDa, ou mieux d'au plus 280 kDa, au mieux d'au plus 250 kDa.

6. Composition selon l'une quelconque des revendications 1 à 5, **caractérisée en ce que** la composition comprend en outre du lactide, en quantités allant de 0,1 à 4,0 % en poids du poids total de la composition.

7. Composition selon l'une quelconque des revendications 1 à 6, **caractérisée en ce que** le caoutchouc et les particules de biopolymère ont un diamètre moyen superficiel D50(s) d'au moins 2,0 $\mu$m, déterminé par analyse au microscope électronique à balayage (MEB), de préférence d'au moins 2,5 $\mu$m.

8. Composition selon l'une quelconque des revendications 1 à 7, **caractérisée en ce que** le polymère monovinylaromatique modifié par un caoutchouc est un polystyrène modifié par un caoutchouc (HIPS) ou par un poly(styrène acrylonitrile) modifié par un caoutchouc (ABS).

9. Composition selon l'une quelconque des revendications 1 à 8, **caractérisée en ce que** le caoutchouc est choisi dans le groupe constitué du polybutadiène, du polyisoprène, des copolymères de butadiène et/ou d'isoprène avec du styrène et du caoutchouc naturel ; de préférence, le caoutchouc est du polybutadiène et le caoutchouc est présent en une quantité allant de 5,0 à 11,0% en poids sur la base du poids du polymère monovinylaromatique modifié par un caoutchouc.

**10.** Composition selon l'une quelconque des revendications 1 à 9, **caractérisée en ce que** la composition présente un allongement à la rupture normalisé d'au moins 40 % après sept jours sous agent de craquage et sous contrainte déterminée par le test au barreau de Dow sur des éprouvettes conformes à la norme ISO 527 1A.

**11.** Procédé de préparation d'une composition de polymère monovinylaromatique modifiée par un caoutchouc selon l'une quelconque des revendications 1 à 10, comprenant l'étape de polymérisation d'un mélange réactionnel de monomère monovinylaromatique, d'un ou plusieurs caoutchoucs, d'un ou plusieurs biopolymères et d'au moins un plastifiant choisi parmi une huile minérale et/ou du polyisobutène, le ou les biopolymères étant présents en une quantité de 0,1 à 10,0 % en poids par rapport au poids total du mélange réactionnel, et au moins un biopolymère étant choisi parmi les poly($\alpha$-hydroxyacides) et/ou les polyhydroxyalcanoates, de préférence choisi parmi l'acide polylactique (PLA), le poly-3-hydroxybutyrate (P3HB), le polyhydroxyvalérate (PHV), le polyhydroxyhexanoate (PHH), le polyhydroxyoctanoate (PHO) et leurs copolymères, ainsi que toute combinaison de ceux-ci.

**12.** Procédé selon la revendication 11, **caractérisé en ce que** le mélange réactionnel est préparé par :

- dissolution séparée de l'au moins un caoutchouc pour former une solution d'alimentation en caoutchouc dissous et l'au moins un biopolymère, pour former une solution d'alimentation en biopolymère dissous, et ajout de la solution d'alimentation en biopolymère dissoute à la solution d'alimentation en caoutchouc dissous, le plastifiant étant dissous séparément ou conjointement avec l'au moins un caoutchouc et/ou avec l'au moins un biopolymère, et éventuellement à un initiateur de radicaux libres, pour former le mélange réactionnel ; ou
- dissolution de l'au moins un caoutchouc pour former une solution d'alimentation en caoutchouc dissous, ajout de l'au moins un biopolymères dans la solution d'alimentation en caoutchouc dissous et par dissolution du ou des biopolymères en présence de la solution d'alimentation en caoutchouc dissous, le plastifiant étant dissous séparément ou conjointement avec l'au moins un caoutchouc et/ou avec l'au moins un biopolymère, et éventuellement ajout d'un initiateur de radicaux libres pour former le mélange réactionnel, ou
- dissolution de l'au moins un biopolymère pour former une solution d'alimentation en biopolymère dissous, ajouta de l'au moins un caoutchouc à la solution d'alimentation en biopolymère dissous et dissolution de l'au moins un caoutchouc en présence de la solution d'alimentation en biopolymère dissous, le plastifiant étant dissous séparément ou conjointement avec l'au moins un caoutchouc et/ou avec l'au moins un biopolymère, et éventuellement ajout d'un initiateur de radicaux libres pour former le mélange réactionnel, ou
- dissolution simultanée de l'au moins un biopolymère et de l'au moins un caoutchouc pour former une solution dissoute contenant du caoutchouc et du biopolymère, le plastifiant étant dissous séparément ou conjointement avec l'au moins un caoutchouc et avec l'au moins un biopolymère, et éventuellement en ajout d'un initiateur de radicaux pour former le mélange réactionnel.

**13.** Procédé selon la revendication 11 ou 12, **caractérisé en ce que** le mélange réactionnel comprend en outre au moins un additif choisi parmi le lactide, un ignifuge, une charge et un polymère différent du polymère monovinylaromatique et différent de l'au moins un biopolymère ; de préférence, le mélange réactionnel comprend au moins un adjuvant choisi parmi le lactide et un plastifiant qui est une huile minérale ; et **en ce que** lesdits additifs sont dissous séparément ou conjointement avec l'au moins un caoutchouc et/ou avec l'au moins un biopolymère.

**14.** Article comprenant la composition selon l'une quelconque des revendications 1 à 10 ou composition préparée par le procédé selon l'une quelconque des revendications 11 à 13, l'article étant de préférence choisi parmi les films, les fibres, les structures en feuille, les objets moulés, les pièces automobiles, les tuyaux, les revêtements de réfrigérateur entre autres, les articles vestimentaires et de chaussure et les joints d'étanchéité, l'article étant tout préférentiellement choisi parmi un revêtement de réfrigérateur et des pièces d'automobile.

**15.** Procédé de fabrication d'un article selon la revendication 14, **caractérisé en ce qu'**il comprend :

- une étape d'extrusion et/ou de thermoformage d'un article, ou
- une étape d'injection d'un article,

l'utilisation de la composition selon l'une quelconque des revendications 1 à 10 ou la composition telle que préparée par le procédé selon l'une quelconque des revendications 11 à 13.

**Figure 1**

**Figure 2A**

27

Figure 2B

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010240832 A
- EP 2632962 A
- US 4388443 A
- JP 2008050426 B
- EP 0770632 A
- WO 2008119668 A
- WO 1998002480 A
- WO 2010081887 A
- FR 2843390
- US 5053522 A
- US 5053485 A
- US 5117008 A